# EUROPEAN PATENT APPLICATION

(11) **EP 4 723 791 A1**
(43) Date of publication of application: **08.04.2026**
(21) Application number: 24204299.2
(22) Date of filing: 02.10.2024
(51) Int. Cl.: H04W 74/0833, H04W 4/70, H04W 8/26

(54) **AMBIENT IOT TEMPORARY IDENTIFIER MANAGEMENT**

(71) Applicant: Panasonic Intellectual Property Corporation of America, Torrance, CA 90504 (US)
(72) Inventor: KUANG, Quan, 63225 Langen (DE); SUZUKI, Hidetoshi, Osaka, 571-8501 (JP); SHARIATMADARI, Hamidreza, 63225 Langen (DE)
(74) Representative: Grünecker Patent- und Rechtsanwälte PartG mbB

(57) **Abstract**

The disclosure relates to an ambient Internet of Things (A-loT) device and a reader device, and respective methods for an A-loT device and a reader device. More specifically, an ambient Internet of Things, A-loT, device, comprises: a transceiver, which in operation: receives a paging message including a persistent identifier, ID, associated with the A-loT device; and circuitry, which in operation: determines, in response to receiving the paging message, whether a temporary ID assigned to the A-loT device by an access network is retained in the A-loT device; and controls, when the temporary ID is retained, the transceiver to transmit the temporary ID to the access network.

## Description

### BACKGROUND

### 1. Technical Field

The present disclosure relates to transmission and reception of in a communication system. In particular, the present disclosure relates to apparatuses and methods and apparatuses such transmission and reception.

### 2. Description of the Related Art

The Internet of things (IoT) market is a major source of revenue for future wireless technology and is a steadily growing market. Building and commercial, health, agriculture, infrastructure, and industries are some of the key sectors targeted by the loT market. Energy harvesting technology is a key to the success of the loT market, as it can considerably reduce device operational costs. Ambient loT (A-loT) is a new 3GPP loT technology, suitable for deployment in a 3GPP system, which relies on ultra-low complexity devices with ultra-low power consumption for the very-low end loT application. A-loT devices may be battery-less with no or limited energy storage capability that do not need to be replaced or recharged manually. Typical application areas of A-loT device include automated warehousing, electronic shelf label, autarkical sensing in rugged and harsh environments difficult to access, or the like. Ambient loT (A-loT) devices (energy harvesting devices) harvest energy from natural or ambient sources, for example, electromagnetic, solar, thermal, mechanical (pressure, vibration), or other power sources, and operate either with a small battery or without battery. The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. Integration of ambient loT (A-loT) devices in communication networks, particularly, 5G and future technologies, is an important demanding task, particularly, since A-loT devices lack RRC states and ARQ and HARQ transmission protocols that ensure reliable data delivery, A-loT devices have limited power available resulting in reduced time periods of communication capability and A-loT devices are configured with new specifically designed new operation states. Moreover, the power consumption and complexity of A-loT devices are typically much lower than existing 3GPP loT technologies (e.g. NB-loT, eMTC, RedCap), and shall address use cases and scenarios that cannot be fulfilled by existing 3GPP loT.

### SUMMARY

One non-limiting and exemplary embodiment facilitates management of a temporary identifier for an ambient Internet of Things, A-loT, device.

In an embodiment, the techniques disclosed here feature an apparatus (e.g. a user equipment, UE, a terminal, an A-loT device). The apparatus comprises a transceiver and circuitry. The transceiver, in operation, receives a paging message including a persistent identifier, ID, associated with the A-loT device. The circuitry, in operation, determines, in response to receiving the paging message, whether a temporary ID assigned to the A-loT device by an access network is retained in the A-loT device; and controls, when the temporary ID is retained, the transceiver to transmit the temporary ID to the access network.

Further exemplary embodiments feature a reader device, a method for an A-loT device, a method for a reader, as well as the corresponding integrated circuits embedding circuitry of the A-loT device or the reader, the corresponding programs implementing the methods, as well as a system comprising one or more readers and one or more A-loT devices.

It should be noted that general or specific embodiments may be implemented as a system, a method, an integrated circuit, a computer program, a storage medium, or any selective combination thereof. For instance, an integrated circuit can control a process of an A-loT device, a reader, a base station (BS), a user equipment (UE), or a network node.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following, exemplary embodiments are described in more detail with reference to the attached figures and drawings.
- **Fig. 1**: shows an exemplary architecture for a 3GPP NR system to which the improved procedures of the present disclosure may be applied.
- **Fig. 2**: illustrates a node-A-loT device topology.
- **Fig. 3**: illustrates another node-A-loT device topology.
- **Fig. 4a**: illustrates a scheme of a 4-step Random Access (RA) procedure for Contention-Based RA (CBRA).
- **Fig. 4b**: illustrates a simplified scheme of a 4-step RA procedure for Contention-Free RA (CFRA).
- **Fig. 4c**: illustrates a scheme of a 2-step RA procedure for CBRA.
- **Fig. 4d**: illustrates a scheme of a 2-step RA procedure for CFRA.
- **Fig. 5**: illustrates an exemplary A-loT protocol stack.
- **Fig. 6**: is a flow chart showing method steps for an A-loT device for determining whether a temporary ID is retained in accordance with exemplary embodiments of the present disclosure.
- **Fig. 7**: is a flow chart showing method steps for a reader device for receiving a temporary ID retained by an A-loT device accordance with exemplary embodiments of the present disclosure.
- **Fig. 8**: illustrates a scheme for determining whether a temporary ID is retained in an A-loT device, within a 4-step A-loT RA procedure according to an embodiment, wherein a random ID is generated by theA-loT device and is used for contention resolution.
- **Fig. 9**: illustrates a scheme for determining whether a temporary ID is retained in an A-loT device, within a 2-step A-loT RA procedure according to an embodiment, wherein a random ID is generated by the A-loT device. The random ID and the retained temporary ID are used for contention resolution.
- **Fig. 10**: illustrates a scheme for determining whether a temporary ID is retained in an A-loT device, within a 2-step A-IoT RA. The retained temporary ID is used for contention resolution.
- **Fig. 11**: illustrates a scheme for determining whether a temporary ID is retained in an A-loT device, within a 2-step A-loT RA without contention resolution (contention-free RA) according to an embodiment.
- **Fig. 12**: illustrates an example of device-reader association on a multi-reader scenario, where the A-loT device receives a paging message from multiple reader devices.
- **Fig. 13**: illustrates an example of sharing a (retained) temporary ID of an A-loT device with a reader and a new reader, with the A-loT device being within the coverage range of the new reader, but outside the coverage range of the reader.
- **Fig. 14**: is a block diagram of a communication system in accordance with exemplary embodiments of the present disclosure.
- **Fig. 15**: is a block diagram of an exemplary circuitry of an A-loT device and a block diagram of an exemplary circuitry of a reader device in accordance with exemplary embodiments of the present disclosure.
- **Fig. 16**: is another block diagram of a communication system in accordance with exemplary embodiments of the present disclosure.
- **Fig. 17**: shows exemplary functional split options in 5G O-RAN, to which exemplary embodiments of the present disclosure may be applied.

### DETAILED DESCRIPTION

### 5G NR system architecture and protocol stacks

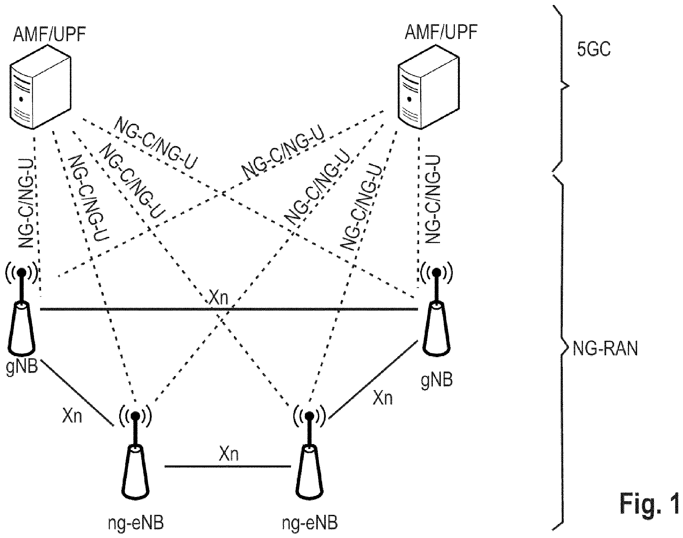

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

### Ambient IoT Device

An ambient loT device (A-loT device) is an energy harvesting device or terminal having a small battery or having no battery. An A-loT device may be an ultra-low complexity device with ultra-low power consumption for very-low end loT applications. Examples for A-IoT devices include without any limitation wearables, smart home devices, automotive devices, sensors, smart keys, healthcare devices, etc.

A-loT devices lack RRC states and ARQ and HARQ transmission protocols that ensure reliable data delivery, A-loT devices have limited power available resulting in reduced time periods of communication capability and A-loT devices are configured with new specifically designed new operation states. Thus, integration of A-loT devices into 5G and future technologies poses a demanding problem that is addressed in the present disclosure.

### Embodiments

The present disclosure addresses the integration of A-loT devices into communication networks, particularly, 5G and future technologies.

It is noted that the present disclosure is not limited to A-loT devices. It may be also applicable to other devices with possibly substantial power limitations.

In the following, A-loT devices, base stations, intermediate nodes and procedures of communication will, particularly, be described for the new radio (NR) access technology envisioned for the 5G mobile communication systems, but may also be used in LTE mobile communication systems, 6G mobile communication systems and other wireless or wired communication system including wireless local area networks or the like. Different implementations and variants will be exemplified. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are, however, to be understood as mere examples discussed herein for illustration purposes that should not limit the scope of the present disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a mobile station or mobile node or user terminal or user equipment (UE) or A-loT device or reader device is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "base station" or "radio base station" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the A-loT device and the base station or an intermediate node is typically standardized and may be defined by different layers, such as PHY, MAC, or the like (see above background discussion).

An A-loT device may communicate with a reader (reader device). A reader is an equipment that directly communicates with the A-loT device. For example, a reader may be a base station. For example, a reader may be an intermediate node (e.g. a UE, or the like).

The present disclosure relates to an A-loT device, a reader device, and a network entity connected to a base station, and to methods of communication for the A-loT device, the reader station and the network entity. A network entity or network function entity may be, for example, a base station or a core network function entity.

### Topologies

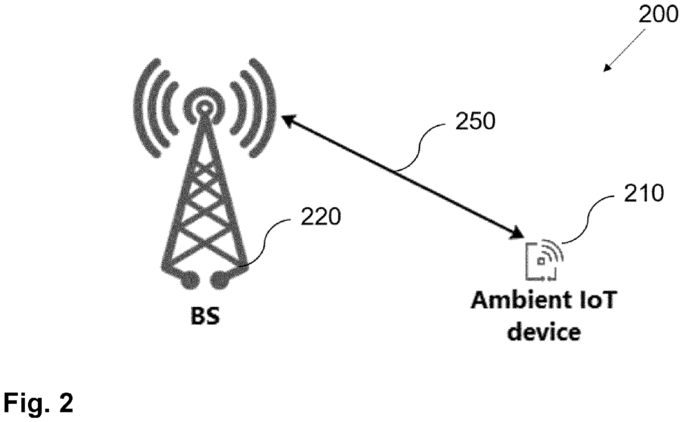

Particularly, two different topologies are exemplarily considered in the present disclosure. In a first topology 200 as illustrated in **Fig. 2****,** an A-loT device 210 directly and bi-directionally communicates with a base station 220 over a wireless channel 250. The communication may include transmitting and/or receiving signals that may carry data. Said signals may also carry metadata, such as position information of the base station and/or A-loT device. The data may include user data (e.g. measurements performed by the loT) and/or signaling information or signals, such as control signals, reference signals or the like. The direct communication with the base station may still include communication via one or more distributed units, DU, of the base stations. A base station may operate one or more cells. In the exemplary implementation of **Fig. 2****,** the base station functions as reader device.

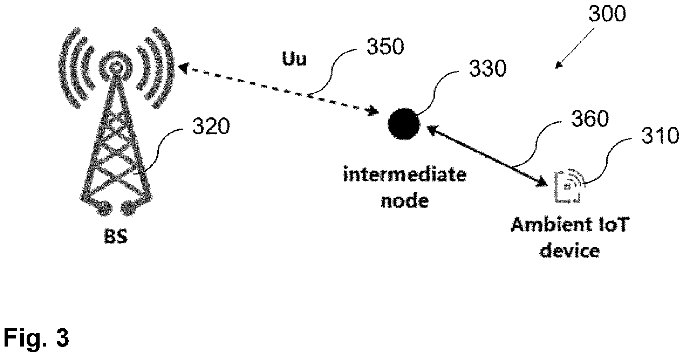

In a second topology as illustrated in **Fig. 3****,** an A-loT device 310 bi-directionally communicates with an intermediate node 330 that is located between the A-loT device 310 and the base station 320. The intermediate node 330 may be a UE, Integrated Access/Backhaul (IAB), relay, or Network Controlled Repeater (NCR). The intermediate node 330 is connected to both the base station 320 and the A-loT device 310 and transfers the user data and/ signaling between the A-loT device 210 and the base station 320. Traffics terminate at or originate from the A-loT device.. The BS 320 may communicate with the intermediate node 330 via a first interface 350. In **Fig. 2** this is exemplified as the Uu interface (UE - gNB interface in NR). The intermediate node 330 may communicate with the A-loT device 310 via a second interface 360. The present disclosure is not limited to any specific interface definition. In general, interfaces 350 and 360 may be both wireless interfaces. In the exemplary implementation of **Fig. 3****,** the intermediate node 330 functions as reader device.

The bi-directional communication between the A-loT device and the BS in **Fig. 2** and, respectively, the A-loT device and the intermediate node may be referred to as Reader-to-Device (R2D) or Device-to-reader (D2R) communication, where the base station or the reader transmits data to the A-loT device or the A-loT device transmits data to the base station or reader.

Typically, A-loT devices may not support mobility as in legacy NR UEs, including functions of cell selection, cell re-selection, handover and the like. In the present disclosure it is assumed that an A-loT device does not support mobility. It is further possible that an A-loT device does not support RRC states, such as RRC CONNECTED, IDLE, INACTIVE supported by NR UEs.

Before a reader, a base station, and/or a central network entity communicates with an A-loT device, the device is typically paged to check whether it is reachable and/or to identify the A-loT device. For that purpose, a paging entity (the base station, reader, and/or network entity) transmits a paging message to the A-loT device and expect receiving a response from the device. Such paging message is typically one of the first messages a reader device, base station, or central network entity transmits to the A-loT device in order to access the A-loT device. It is noted that the term "paging" has been used to denote what can be in other words expressed as initial contacting or initial triggering of an A-loT device (or of any other device). Typically, such initial triggering has been used to trigger a terminal (e.g. UE, A-loT, or the like) to establish a communication which may include performing a random access (RA) procedure, as exemplified in detail in the following.

### Random Access procedures

For example, a RA in NR and in general may be a 4-step or a 2-step RA. In particular the RA may comprise or consist of e.g. 4 or 2 steps. However, the term *"RA procedure"* is in general not to be understood to any particular number of steps or the particular examples of RA procedures described herein.

Furthermore, in general, the RA procedure may be a contention-based RA (CBRA) procedure or a contention-free RA (CFRA) procedure (see e.g. 3GPP TS 38.300 v18.0.0 section 9.2.6 for a high level description).

In the following, details of the 5G NR RA procedure are described. Similar to LTE, 5G NR provides a RACH (Random Access Channel (RACH procedure)) procedure (or simply random access procedure (RA procedure). For instance, the RACH procedure can be used by the UE to access a cell it has found. The RACH procedure can also be used in other contexts within NR, for example:
- For handover, when synchronization is to be established to a new cell.
- To reestablish uplink synchronization to the current cell, if synchronization has been lost due to a too long period without any uplink transmission from the device.
- To request uplink scheduling, if no dedicated scheduling request resource has been configured for the device.

There are numerous events that may trigger the UE to perform a random access procedure (see e.g. 3GPP TS 38.300 v18.0.0, section 9.2.6), including the following. The random access procedure is triggered by a number of events:
- Initial access from RRC_IDLE;
- RRC Connection Re-establishment procedure;
- DL or UL data arrival, during RRC_CONNECTED or during RRC_INACTIVE while SDT procedure is ongoing, when UL synchronisation status is "non-synchronised";
- UL data arrival, during RRC_CONNECTED or during RRC_INACTIVE while SDT procedure is ongoing, when there are no PUCCH resources for SR available;
- Handover;
- SR failure;
- Explicit request by RRC upon synchronous reconfiguration;
- RRC Connection Resume procedure from RRC_INACTIVE;
- To establish time alignment for a primary or a secondary TAG;
- Request for Other SI;
- Beam failure recovery;
- Consistent UL LBT failure on SpCell;
- SDT in RRC_INACTIVE;
- Positioning purpose during RRC_CONNECTED requiring random access procedure, e.g., when timing advance is needed for UE positioning;
- Early UL synchronization with an LTM candidate cell;
- RACH-based LTM cell switch.

A mobile terminal can be scheduled for uplink transmission if its uplink transmission is time synchronized. Therefore, the Random Access Channel (RACH) procedure plays a role as an interface between non-synchronized mobile terminals (UEs) and the orthogonal transmission of the uplink radio access. For instance, the Random Access is used to achieve uplink time synchronization for a user equipment, which either has not yet acquired, or has lost, its uplink synchronization. Once a user equipment has achieved uplink synchronization, the base station can schedule uplink transmission resources for it. One scenario relevant for random access is where a user equipment in RRC_CONNECTED state, handing over from its current serving cell to a new target cell, performs the Random Access Procedure in order to achieve uplink time-synchronization in the target cell.

The PRACH consists of a preamble format made up of one or more preamble sequences transmitted in a time-frequency resource. The UE transmits the PRACH preamble in a PRACH occasion (RO) which is a time-frequency resource that the network allocates for preamble transmission. Each RO can be configured with 64 preambles. The higher layer parameter prach-Configurationlndex determines the PRACH preamble format and the time domain resources of PRACH occasions, by pointing to a row in the random access configuration tables of 3GPP TS 38.211 (Tables 6.3.3.2-2/3/4).

There can be at least two types of random access procedures, contention based random access (CBRA) procedure, and contention free random access (CFRA) procedure. In the CBRA procedure, multiple users randomly select a preamble from a pool of preambles, and a contention resolution phase determines which user, if any, had its data successfully received by the network. Contention resolution resolves contention between two or more users selecting the same preamble. In the CFRA procedure, a preamble is uniquely pre-allocated to the user, hence there is no possibility of preamble collision between users and no need for contention resolution. An exemplary definition of a random access procedure can be found in 3GPP TS 38.321, v18.0.0 section 5.1.

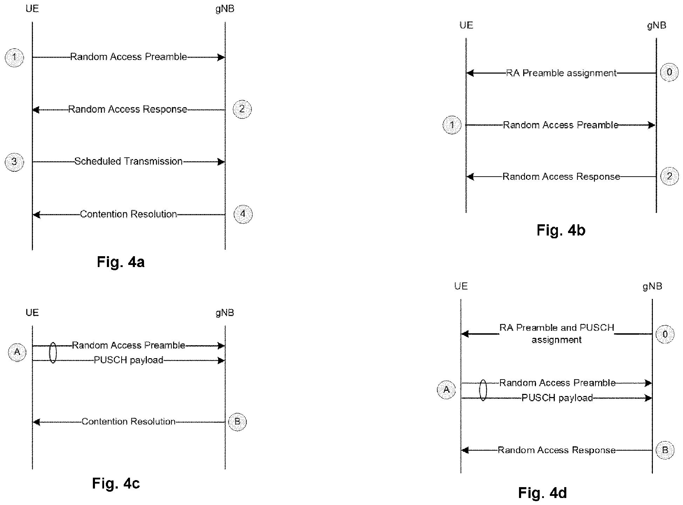

Different types of RA procedure will be described in the following in more detail, with reference to **Figs. 4a, 4b, 4c** and **4d****.**

### Contention-based RA (CBRA) procedure of 4-step type

A CBRA procedure of the so-called 4-step type is described in more detail with respect to **Fig. 4a****.** In particular, such a 4-step RA procedure may comprise or even consist of four "steps" (in particular four transmissions).

As shown in **Fig. 4a****,** in a first step, the user equipment transmits a random access preamble on the Physical Random Access Channel (PRACH) to the base station (i.e. message 1 of the RACH procedure, also referred to as Msg1). In other words, the first transmission (i.e. said first message is temporally before all other transmissions of the RA procedure) of the RA procedure is (i) transmitted by the UE to the base station, and (ii) includes a random access preamble. When the UE transmits the preamble to the gNB, it conveys the selected SS/PBCH block index to the gNB. The network configures the association between the SS/PBCH Block indices and the PRACH occasions and preamble indices by broadcast signaling.

In a second step, the gNB acknowledges the reception of the preamble by sending a random access response (RAR) e.g. on a PDSCH channel. The second transmission is also referred to as Msg2 or message 2 of the RACH procedure. In other words, the second transmission (i.e. second in time among the transmissions of the RA procedure) of the RA procedure is (i) transmitted by the base station to the UE, and (ii) includes a random access response.

The RAR may be scheduled by a Downlink Control Information (DCI) with a CRC scrambled by the Random Access Radio Network Temporary Identifier (RA-RNTI) on the corresponding PDCCH. The PDCCH of the RAR may be transmitted in Type1-PDCCH Common Search Space (CSS). The RA-RNTI is a function of the time and frequency of the PRACH occasion the preamble is detected (see e.g. 38.321).

The UE attempts to receive the RAR during the RAR window. In NR, the RAR window starts at the first symbol of the earliest CORESET (control resource set) of Type1-PDCCH CSS that starts at least one symbol after the PRACH occasion corresponding to the PRACH transmission. The RAR window size is configured in number of slots and is less than 10 ms. In case of CBRA, the DMRS port of the PDSCH channel carrying the RAR and the DMRS port of the corresponding PDCCH channel are quasi-co-located with the reference signal used for association and transmission of the corresponding preamble.

At the start of the random access procedure, the UE sets the PREAMBLE_TRANSMISSION_COUNTER to 1. If the UE doesn't receive the RAR during the RAR window with a RAPID (random access preamble identity) that matches the transmitted preamble, it increments the PREAMBLE_TRANSMISSION_COUNTER by 1 and retransmits the PRACH preamble after a back off period. After several PRACH preamble retransmissions attempts, when the PREAMBLE_TRANSMISSION_COUNTER exceeds higher layer parameter *preambleTransMax,* without receiving a RAR with a RAPID that matches the transmitted preamble, the Random Access Channel (RACH) procedure fails.

When the UE successfully decodes a RAR with a RAPID that matches the transmitted preamble and that includes a MAC RAR, the UE performs the following:
- It processes the received TA command.
- It processes the UL grant in the MAC RAR, and in response transmits a PUSCH (a.k.a. Msg3).

In the third step of the 4-step CBRA procedure, the UE transmits Msg3 on the Uplink Shared Channel (UL-SCH) on a PUSCH in response to the uplink grant of the RAR. Msg3 contains C-RNTI MAC CE if the UE triggering the CBRA procedure is in CONNECTED Mode with a C-RNTI, or it contains the CCCH SDU with the Contention Resolution Identity MAC CE. The trigger of the random access procedure, determines the content of Msg3. For example:
- During initial access, Msg3 contains RRCSetupRequest.
- During Radio Resource Control (RRC) re-establishment, Msg3 contains RRCReestablishmentRequest.
- To transition from the RRC_INACTIVE state to the RRC_CONNECTED state, Msg3 contains RRCResumeRequest or RRCResumeRequest1.
- To get system information, Msg3 contains RRCSystemlnfoRequest.
- During contention-based BFR Msg3 contains C-RNTI MAC CE.

After the UE transmits Msg3, it starts the ra-ContentionResolutionTimer and monitors the PDCCH channel. The UE can receive a PDCCH with a CRC scrambled by the TC-RNTI requesting a retransmission of Msg3, if the gNB didn't successful decode Msg3. When the UE retransmits Msg3, it restarts the ra-ContentionResolutionTimer after the Msg3 retransmission.

In the fourth step of the CBRA procedure, the gNB transmits a message to the UE (also referred to as Msg4).
- If Msg3 contained the C-RNTI MAC CE, the gNB transmits a PDCCH with CRC scrambled by the C-RNTI. Upon reception of this PDCCH, the UE stops ra-Contention Resolution Timer and considers the CBRA procedure successful.
- If Msg3 contained the CCCH SDU, the gNB transmits a PDCCH scheduling a PDSCH with CRC scrambled by the TC-RNTI, indicated to the UE in the RAR. The corresponding PDSCH echoes back the contention resolution identity received in Msg3. Upon reception of the PDCCH scheduling a PDSCH and with CRC scrambled by the TC-RNTI, the UE decodes the corresponding PDSCH. If the contention resolution identity received in the PDSCH matches that transmitted in Msg3, the UE stops ra-ContentionResolutionTimer and considers the CBRA procedure successful and sends uplink Hybrid Automatic Repeat Request (HARQ) acknowledgement to the gNB to stop any further retransmissions of this message.
- Else when the contention resolution identity received in the PDSCH doesn't match that transmitted in Msg3, the UE stops ra-ContentionResolutionTimer and considers the Contention Resolution unsuccessful.

If the ra-ContentionResolutionTimer expires before the UE successfully receives the downlink message transmitted by the gNB, the UE considers Contention Resolution unsuccessful. If Contention Resolution is unsuccessful, the UE increments the PREAMBLE_TRANSMISSION_COUNTER by 1 and restarts the random access procedure, with preamble selection, after a back off period. After several PRACH preamble retransmissions attempts, when the PREAMBLE_TRANSMISSION_COUNTER exceeds higher layer parameter preambleTransMax, without successful completing the random access procedure, the RACH procedure fails.

### Contention-free RA (CFRA) procedures of 4-step type

**Figs. 4b** illustrates a CBFA procedure that is simplified in comparison to the 4-step CBRA procedure shown in **Fig. 4a****.** The base station provides in a first step the UE with a dedicated preamble to use for random access so that there is no risk of collisions, i.e. no risk of multiple UEs transmitting the same preamble. Accordingly, the UE subsequently sends the preamble that was signaled by the base station in the uplink on a PRACH resource. Since the case that multiple UEs are sending the same preamble is avoided for CFRA, essentially, a CFRA procedure is finished after the UE have successfully received the random access response.

As can be seen in **Fig. 4b****,** a 4-step CFRA may not comprise or consist of 4-steps. It may be referred to as 4-step CFRA, since the transmission of the preamble does not include PUSCH payload, which is similar to the 4-step CBRA procedure (and different from the 2-step types described below).

In more detail, the UE-dedicated preamble assignment determines:
- The preamble index.
- The mask index to determine the PRACH Occasion(s) to use for preamble transmission within the set of PRACH occasions associated with the SS/PBCH Block or the channel-state information reference signals (CSI-RS) used for preamble transmission. The UE transmits on a preassigned preamble index and PRACH occasion(s) associated with a reference signal (SS/PBCH block or CSI-RS) that exceeds a higher layer configured threshold rsrp-ThresholdSSB or rsrp-ThresholdCSI-RS.

As the preamble is preassigned by the network, there is no contention resolution phase. As the preamble is dedicated, it also identifies the UE to gNB. The random access procedure is considered successful after reception of a RAR with a RAPID that matches the transmitted preamble.

The network configures dedicated PRACH preambles through *rach-ConfigDedicated.* Dedicated PRACH preambles are also known as contention free preambles or non-contention preambles. The dedicated RACH configuration can be used for reconfiguration with sync procedures such as handover. The network can configure dedicated preambles that are associated with either SS/PBCH blocks or with CSI-RS resources. The UE identifies the SSB index/CSI-RS resources index of candidate beams, and finds the corresponding PRACH occasion and preamble index within each PRACH occasion to use.

*rach-ConfigDedicated* includes:
- The PRACH occasions to use for dedicated preambles,
- The dedicated (i.e. contention free) PRACH resources. This is a list of preamble resources associated with either SS/PBCH blocks or CSI-RS resources.
- Parameters to apply for prioritized CFRA procedures.

### CBRA and CFRA procedures of 2-step type

Both RA procedures (CBRA and CFRA), are possible in 2-step RA type too. In particular, such a 2-step RA procedure may comprise or even consist of two "steps" and thus is often termed for example as a 2-step RACH procedure. A 2-step type CBRA procedure is illustrated in **Fig. 4c****,** and a 2-step type CFRA procedures is illustrated in **Fig. 4d****.** As can be seen, the 2-step type RA procedures differ from the 4-step RA procedures in that the first transmission of the UE includes a preamble and (PUSCH) payload.

For instance (see **Fig. 4c** and **4d****),** 3GPP also defines a 2-step procedure for 5G NR, where a message 1 (for the 2-step types termed MsgA), that corresponds to messages 1 and 3 of the corresponding four-step LTE/NR RA procedure, is transmitted at first (i.e., 2-step CBRA combines/corresponds to Msg1 and Msg 3 of a 4-step CBRA in MsgA; and 2-step CFRA combines/corresponds to Msg1 and Msg 3 of a 4-step CFRA in MsgA). The MsgA of the 2-step RACH type includes a preamble on the Physical Random Access Channel (PRACH) and a payload on the Physical Uplink Shared Channel (PUSCH).

After MsgA transmission, the UE monitors for a response from the gNB within a configured time window. Then, the gNB will respond with a message 2 (termed as MsgB), corresponding to messages 2 and (for CBRA) 4 of the corresponding 4-step LTE/NR RA procedure (i.e., 2-step CBRA combines/corresponds to Msg2 and Msg 4 of a 4-step CBRA in MsgA; and 2-step CFRA combines/corresponds to Msg2 of a 4-step CFRA in MsgA).

This MsgB can include e.g. a Success random access response (RAR), a Fallback RAR, and optionally a backoff indication. If contention resolution is successful upon receiving the Success RAR, the UE ends the RA procedure; while if Fallback RAR is received in MsgB, the UE performs message 3 transmission (as in 4-step RACH procedure) and monitors contention resolution. Some further exemplary assumptions are made for the 2-step RACH procedure, such as that the UE, after deciding on the RACH type (e.g. the 2-step RACH), keeps retrying that same RACH type until failure. But there may be also the possibility that the UE can switch to the 4-step RACH procedure after certain reattempts of transmitting MsgA.

Another difference in terms of RRC is the big number of RRC configurations needed for 2-step RACH, in particular the PUSCH physical resources used to transmit MsgA (see below).

PRACH preamble and PUSCH in MsgA are transmitted in TDM (time division multiplex) fashion. The transmission of PUSCH is after the PRACH transmission by at least N symbols, where the value of N depends upon SCS (subcarrier spacing) of the active UL BWP.

Moreover, the network may semi-statically determine radio resources, to be used for performing the 2-step RACH procedure and the 4-step RACH procedure, that are exclusive from one another. The radio resources used for transmitting the first message in the RACH procedure include at least the RACH occasion as well as the preambles. For instance, in the 2-step RACH procedure, the first message MsgA uses not only the PRACH resource (e.g. the RACH occasion and preamble) but also the associated PUSCH resources.

In more detail, in 2-step RA type, PUSCH is transmitted without waiting for a response from the network, hence the UE needs to know PUSCH configuration beforehand. The configuration for PUSCH is given in the IE msgA-PUSCH-Config:
- This IE is used to specify the PUSCH allocation for MsgA in 2-step RA type. It provides the UE with all needed configuration for PUSCH transmission such as time/frequency domain resource, DMRS type, MCS, PUSCH Tx power related parameters etc.
- This IE is configured separately for CFRA and CBRA, where for CBRA, the IE msgA-PUSCH-Config is configured as part of BWP-UplinkCommon IE. For CFRA, the IE msgA-PUSCH-Config is configured as part of the IE CFRA-TwoStep (discussed later) within RACH-ConfigDedicated.

Furthermore, when doing a message-A PUSCH transmission, there is not yet any closed-loop uplink timing control. Consequently, the message-A PUSCH transmissions may arrive with a relatively large timing misalignment relative to other uplink transmissions.

Generally, for RACH preambles, see for example, 3GPP TS 38.211 V18.1.0, "Table 6.3.3.2-2: Random access configurations for FR1 and paired spectrum/supplementary uplink" and section 6.3.3.2, "Mapping to physical resources".

The UE selects 2-step or 4-step RA type at the initiation of the RA procedure based on network configuration. For the CBRA case:
- When both 4-step and 2-step RA types are configured by the network, an RSRP threshold is used by the UE to select between 2-step RA type and 4-step RA type. The RSRP threshold is configured by the field msgA-RSRP-Threshold.
- If the RSRP is above this threshold, the UE select 2-step RA type otherwise, 4-step RA type is chosen.

For the CFRA case:
- When CFRA resources for 4-step RA type are configured, the UE performs random access with 4-step RA type.
- When CFRA resources for 2-step RA type are configured, UE performs random access with 2-step RA type.
- The network does not configure CFRA resources for both 4-step and 2-step RA types at the same time.

The advantages of a 2-step RACH compared to 4-step RACH are:
- Reducing the control signal overhead
- Reduce the latency.
- Allowing PUSCH transmission at the first step.

### A-loT Protocol Stack

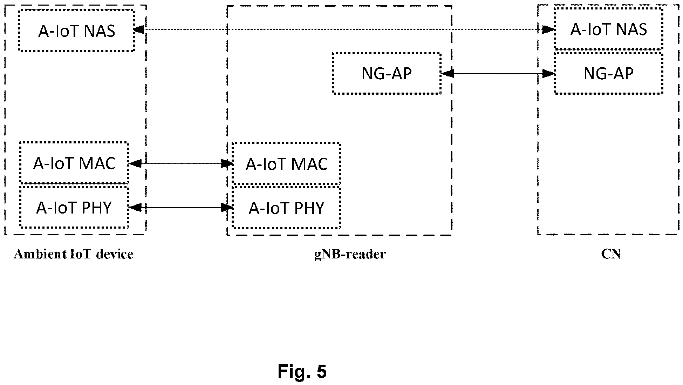

An A-loT device, a reader device (e.g gNB-reader), and a core network CN entity may communicate on different layers. An exemplary protocol stack is illustrated in **Fig. 5****.** The A-loT device may bi-directionally communicate (transmitting/receiving operations) with the central network entity on an upper layer (also referred to as higher layer) which may be a layer above the L1/L2 layer. Since such communication may be transparent to the access network, it is referred to as NAS (Non-Access Stratum) layer(s) as opposed to AS layer(s) (Access Stratum) including protocols within the access network.

The A-loT device may bi-directionally communicate with a gNB-reader on the lower layers to keep processing at a low complexity. Such layers may be the PHY and/or the MAC layer. The gNB-reader may communicate bi-directionally with the central network entity in the application layer, such as Next Generation Application Protocol (NG-AP).

The AS layer design may assume no support of AS security. As to the protocol stack for the A-loT interface between the A-loT device and the (gNB-)reader, the following assumption may be made:
- RRC layer is not supported
- SDAP layer is not supported
- PDCP layer is not supported
- RLC layer is not supported
- A-loT MAC layer is supported
- A-loT physical layer is supported

As to the A-loT required functionalities, the following functionalities should be supported:
- A-loT paging
- A-loT random access procedure
- A-loT data transmission

As to the A-loT required functionalities, at least the following functionalities may not be supported: RRC states, RRC connection management, RRM L3 measurement reporting, Mobility, ASN.1 encoding/decoding, Periodical system information and MIB, Tracking/RAN area update procedure, Per-packet QoS and per-QoS flow at AS level, HARQ, RLC ARQ/AM, AS-layer (above physical layer) RLC-like/ARQ-like retransmission, AS-layer (above physical layer) repetition, (it may not be precluded that the reader and A-loT device send the "payload" again as new transmission from A-loT MAC perspective), Multiple A-loT logical channels for upper layer data, Legacy NR SR, and Legacy NR BSR.

### A-IoT Random Access Procedure

The Ambient loT device(s) may access the network for data transmission. The A-loT random access may be triggered by the reader, including triggering the access for a single A-loT device, a group of A-loT devices, or all A-loT devices under the coverage of the reader. A slotted-ALOHA may be the baseline for an A-loT random access procedure. When the A-loT device is selected to respond to the A-loT paging message received from the reader, the A-loT device may perform a RA procedure, which may be different than the RA procedures described above with reference to Figs. 4a to 4d (e.g. in order to tailor it to A-loT operation to reduce complexity and signaling overhead). Currently, A-loT RA procedure is under the study by 3GPP working groups. Some outcomes of the study have been captured, e.g., in section 6.3.4 of 3GPP TR 38.769 v1.0.0 (2024-09). See below for more details.

The A-loT device may perform the following procedure for A-loT random access:
- **Step 1:** Random access type and access occasion/resource determination:
   - If the random access is contention-free access:
      - Selects the indicated D2R occasion/resource;
      - Skips the contention resolution in Step 2 and performs the Step 3 for data transmission.
   - If the random access is contention-based random access:
      - Performs access occasion/resource determination/selection: [for further study];
      - Performs the Step 2 for contention resolution.
- **Step 2:** Contention resolution of contention-based random access:
   - There are two candidate solutions being studied for the contention resolution, as below:

### - Solution 1: A-loT Msg1 without data

- A-loT Msg1: When the A-loT device identifies the start of its own access occasion, it sends one random ID generated by the A-loT device to the reader.
- A-loT Msg2: The reader responds with the successfully received random ID.

If the A-loT device receives the A-loT Msg2 including a random ID, which is the same as the previously transmitted one in A-loT Msg1, it considers the contention resolution as successful.

### - Solution 2: A-loT Msg1 with data

- A-loT Msg1: When the A-loT device identifies the start of its own access occasion, it sends the A-loT Msg1 including the upper layer data, which can be the device ID and/or any other upper layer data.
- A-loT Msg2: The reader may respond with the successfully received [for further study: what information].

If the A-loT device receives the A-loT Msg2 including a [for further study: what information], which is the echo to the previously transmitted one in A-loT Msg1, it considers the contention resolution as successful.

### - Step 3: Data transmission:

- After the A-loT device considers the contention resolution as successful if the contention-based random access is used, or if the contention-free access is used, it may perform the upper layer data transmission with the reader, which can be the device ID and/or any other upper layer data, if any.

Although the present disclosure can be readily applied to the NR, it is noted that the present disclosure is not limited to any specific random access procedure or to any specific mobile communications system.

As mentioned above, A-loT RA procedure is triggered by A-loT paging (or sometimes referred to as Msg0). In order to reach a particular device, an ID of the device must be included in the A-loT paging message. A temporary ID for identifying an A-loT device and having a short length can be considered to provide security and signaling overhead benefit. A temporary ID is not necessarily unique within the entire world or even within 3GPP network. This enables to keep it shorter than unique identifiers (within the 3GPP network or even world). Accordingly, it may be desirable to use the temporary ID instead of longer IDs. The ID is referred to as temporary since it may be assigned to an A-loT device by the network only for a certain time duration and may be then re-assigned to another A-loT device.

When a reader attempts paging a device using an assigned temporary ID, but does not receive any response from the device, the reader does not know whether the device has lost its temporary ID and/or has moved out of the coverage area of the reader. In the latter case, the device may still retain its assigned temporary ID and, while moving out of the coverage area of the reader, may enter into a coverage area of another reader. The assigned temporary ID may have been assigned to the device for instance in a previous paging process or the like. In case that the A-loT device has moved into a coverage area of another reader, it is unclear whether the new reader can still use the temporary ID assigned previously by the old reader.

Therefore, when the reader attempts to page the device, it does not know which ID to use for device paging. Furthermore, the reader has no possibility to know or verify the availability of the assigned temporary ID at the device.

In another scenario, reader may need to perform proximity check periodically. It would be advantageous for the reader to be able to distinguish the devices that have been already registered and retained temporary ID from the devices that have newly moved into the coverage. For the former devices, unnecessary procedures of re-assigning temporary ID can be avoided.

The present disclosure provides for techniques including apparatuses, and methods that facilitate a reliable determining of whether a temporary identifier (temporary ID) is retained by a device, such as an A-loT device.

Readers and/or base stations are entities of an access network, which typically assigns a temporary ID to an A-loT device for AS level usage. This means that any entity of the access network, for example, one or more readers or one or more base stations, may assign a temporary ID to an A-loT device that performs communication with said entities. In general, the temporary ID may be assigned by any (access) network entity. In case that a temporary ID is assigned by a core network entity, it can be used for both NAS and AS layer communications.

### A-loT Temporary Identifier Management

Temporary IDs may be managed by a reader device R (also referred to as reader), a base station BS (also referred to as gNB), a core network CN entity, or the like.

In the present disclosure, an A-loT device is capable to check whether a temporary ID is retained in the A-loT device. If this is the case, the A-loT device can send the (own) retained temporary ID to the reader. Based on this information, the reader may determine which ID to use for the forthcoming communication (e.g. paging). The A-loT device may be requested by the reader to check whether a temporary ID is retained.

For example, it is provided an A-loT device, comprising a transceiver which is capable of receiving wireless signals. The A-loT device further comprises circuitry, which may be processing circuitry.

The term ***"transceiver"*** refers to a front end including one or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term *"transceiver"* is used for hardware and software components that allow a communication apparatus (or "communication device") to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term ***"circuitry"*** herein refers to any hardware and/or software. For example, the circuitry may include one or more processors (or processing units or any LSIs), microcontrollers, programmable hardware such as FPGA(s) (field programmable gate array) and/or dedicated hardware such as ASIC(s) (application-specific integrated circuit) or the like, possibly further including further digital or analog circuits.

For example the transceiver may receive a signal carrying a paging message that includes a persistent ID associated with the A-loT device.

The term "paging message" is exemplary and may be any kind of message suitable for initiating and/or triggering processes needed for paging or reaching an A-loT device by a reader and/or base station. The paging message may be received as a reader-to-device (R2D) message. Hence, the paging message may refer to as a triggering message, initial triggering message, initial message or R2D triggering message or the like.

In AS, the A-loT paging functionality is to indicate device(s) that are requested to respond. As to the A-loT paging message, an identifier may be required to identify the device or group of (A-loT) devices in this trigger message (e.g. for the case of reaching a single or a group of devices). There may be various identifiers carried by the paging message:
- The A-loT paging message containing an identifier of a single A-loT device,
- The A-loT paging message containing a group ID that maps to multiple A-loT devices,
- The A-loT paging message that does not contain any identifier, which is interpreted as indicating that all A-loT devices that can receive the A-loT paging message need to respond, and
- The A-loT paging message containing multiple identifiers of A-loT devices.

As to the A-loT paging message, it can additionally indicate the information from which the device(s) can determine the resource(s) to be used for D2R response message(s).

From 3GPP RAN2 working group perspective, it is assumed that the A-loT device can receive as long as there is enough energy for communication.

The term "persistent ID" refers to any ID that is different from the temporary ID and that may be retained even though the temporary ID cannot be retained. For example, a persistent ID means exists over a predefined time duration (time window), over which the A-loT device communicates with the reader and/or base station. For example, the persistent ID may be stored in a non-volatile memory section. In this way, even if the A-loT device has not enough energy for communication (or is switched off), the persistent ID (unlike the temporary ID) is retained. However, the present disclosure is not limited to such persistent ID. The persistent ID may be stored in a volatile memory. For example, it may be stored in a memory section that is powered even in a scenario that there is not enough power for communication. Thus, a persistent ID may exist (be stored) even though there is no communication coverage, and as long as the A-loT device still has sufficient power to store the persistent ID in the volatile memory.

Such persistent ID may be, for example, one of:
- a group ID stored on the A-loT device in a memory that is persistent in case there is not sufficient power to perform communication,
- a medium access control, MAC, address of the A-loT device, and
- a unique identifier in a 3gpp system, associated with the A-loT device.

The MAC address may be also referred to as a permanent device ID. Alternatively, the persistent ID may be an International Mobile Subscriber Identity (IMSI) or an Electronic Product Code (EPC). In these and similar cases, the persistent ID is independent of a specific access network node (e.g. BS or reader).

As exemplified above, an A-loT device may be pre-configured with a persistent device ID and/or group ID. The device ID may refer to an ID specific (dedicated) to the A-loT device. For example, the device ID may be uniquely allocated by a network such as the 3GPP network. In another example, an Electronic Product Code (EPC) may be used as the device ID and is designed to be unique across all physical objects in the world, over all time, and across all categories of physical objects.

A group ID is an ID which is pre-configured and common to a group of A-loT devices. The group of A-loT devices includes two or more A-loT devices. A base station, a reader, or a core network entity may assign a group ID to a group of A-loT devices. For example, the base station may select two or more A-loT devices among a plurality of A-loT devices based on reception quality (e.g. reception receiver strength RSSI, channel state information CSI etc.) between each of the A-loT devices and the reader. This means that, for example, the RSSI between each of the A-loT devices of a group and the reader have the same RSSI and/or the RSSI fall within the same range - at least temporary. For example, group ID can be assigned to the device, e.g. by service provider or manufacturer, or assigned by the network after completing registration procedure of the device to the network. For example, the group ID can be devised based on categories of devices, as served by the network. The categories below give a few examples, where group IDs can be assigned using one or more categories as applicable to an A-loT application.
- Device type: "type 1", "type 2a", "type 2b", "type 3", etc.
- Cryptographic capabilities: "no authentication", "require authentication", etc.
- Cryptographic algorithm capabilities: "supported algorithm X", "supported algorithm Y", etc.
- Registered operator: "local operator", "roaming", "operator X", "operation Y", etc.
- Device usage type (generic): "inventory", "command".
- Device usage type (application specific): "inventory of medicine", "inventory of expensive equipment", "inventory of staff equipment" etc.
- Device identification/ supervisory node: "reader", "gNB", "core network", "third party node".
- Device ID assignment format: "operator assigned format", or "Electronic Product Code (EPC) standard", or "3GPP standard" etc.

The device ID and/or the group ID may be stored in a memory of the reader. Alternatively or in addition, the (permanent) device ID and/or the group ID may be stored by the core network entity. It is noted that reader, base station, and core network entity may also store MAC addresses of the A-loT devices, which are "permanent" hardware addresses. In general, the reader may store the persistent ID of one or more A-loT devices.

While a persistent ID such as the MAC address or other ID types mentioned above may be used for paging, they may be rather long. Consequently, in order to maintain low signaling overhead, temporary IDs are preferably used. For example, a MAC address may be 48 bits long, while a temporary address may be about 16 bit long. This example is not limiting and other sizes may apply to the persistent and the temporary IDs.

The A-loT device may receive the paging message originated (or initiated) from a reader device, a base station, or a core network. In case of the core network entity, the paging message may be relayed via the reader device or the base station. The protocol stack may be similar as the one shown in Fig. 5. However, the present disclosure is not limited to the exemplary protocol stack of Fig. 5.

In response to receiving the paging message, the circuitry or the A-loT device determines whether a temporary ID assigned to the A-loT device by a network is retained in the A-loT device. A temporary ID refers to an ID that exists over a limited time.

It is noted that the temporary ID may be an ID assigned to the A-loT device by the access network. The present disclosure is not limited to temporary ID solely on AS level. Rather, the temporary ID may be a NAS level temporary ID that may be assigned by the CN. The reader (and the access network) may then use such NAS level ID. The usage may be as described in the present disclosure, including the checking whether it has been retained.

For example, the temporary ID may be stored in a volatile memory section that is powered when the device has enough energy for communication (e.g. with a reader). Thus, the determination whether a temporary ID is retained may include checking the volatile memory section on whether a temporary ID is stored therein. If this is the case, it means that the temporary ID is retained. A temporary ID that is retained by the A-loT device may be referred to as retained temporary ID, indicating that a temporary ID has been retained from previous usage (e.g. for paging or data communication or the like). However, the determination whether a temporary ID is retained may be performed in a different manner and the present disclosure is not limited to the above example.

As noted above, A-loT device may extract the energy needed for operation, at least for a certain extent of time, from ambient power sources. This implies that, for example, storage of data (e.g. IDs) in volatile memory may reside over a limited time in said storage, after which the stored IDs are no longer held. The duration over which (sufficient) power is available, may depend on the extent of receiving, transmitting, processing, and/or memory access operations as they consume power. Hence, the A-loT device may retain the temporary ID over a finite lifetime and then expire. The duration of power residing in the A-loT device for the temporary ID may be indicated by an indicator. Such indicator may be signaled by a reader, a base station, or a core network entity, when preconfiguring IDs for assigning them to A-loT devices. Such indicators of residing power map onto respective values of duration, i.e. lifetime / expiration time. It is noted that lifetime / expiration time may be upper limits (i.e. best case scenarios), because a reader, a base station, and a core network entity may a *priori* not know the extent to which an A-loT device may perform receiving / transmitting / processing / storing operations. Moreover, different types of operations (receiving / transmitting / processing /storing) may consume a different amount of power. The duration of power may be preconfigured based on preceding A-loT paging procedures.

Alternatively or in addition, since a temporary ID may be specific for a specific reader device, the temporary ID may no longer be retained in case the A-loT device happens to be outside the coverage range of the reader, even if the A-loT device still has sufficient power to keep the temporary ID in the volatile memory for example. However, it may be possible to maintain, at the A-loT device, also the reader identity associated with the retained temporary ID and/or store temporary IDs of a plurality of readers in association with the respective readers.

When the temporary ID is retained by the A-loT device, its circuitry controls the transceiver to transmit the temporary ID to the access network. The A-loT device may transmit the temporary ID to a reader device or a base station that transmitted the paging message triggering the A-loT device to check whether a temporary ID is retained.

The temporary ID may be an identifier for the A-loT device on AS-level (access stratum level) or on NAS-level (non-access stratum level). Without limiting the present disclosure, the temporary ID may be referred to as AS-level ID herein. However, the temporary ID may also be a NAS-level ID.

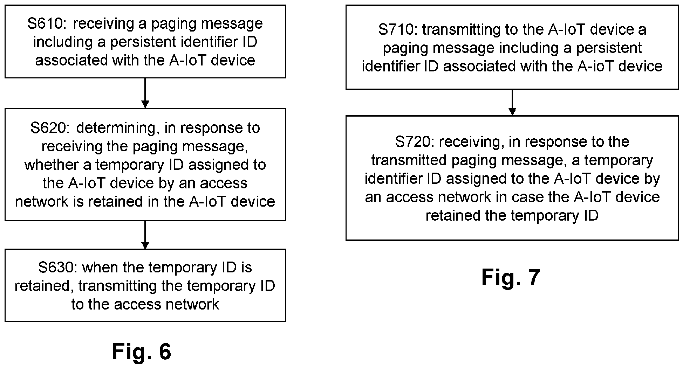

In correspondence with the above-described A-loT device, a method for checking whether a temporary ID is retained in the A-loT device is provided. **Fig. 6** shows the steps of said method that comprises:
- Step 610: receiving a paging message including a persistent identifier, ID, associated with the A-loT device.
- Step 620: determining, in response to receiving the paging message, whether a temporary ID assigned to the A-loT device by an access network is retained in the A-loT device.
- Step 630: when the temporary ID is retained, transmitting the temporary ID to the access network.

When referring to access network, what is meant is any entity in the access network (radio access network) such as a reader, base station, repeater, or the like. It is noted that although embodiments and examples of the present disclosure are provided in terms of devices providing the functionality, the corresponding methods are also provided. Moreover, it is noted that any of the steps described above may be included as code instructions in a program, which may be executed by one or more processors.

When it is determined that the temporary ID is not retained, the circuitry of the A-loT device may further control the transceiver to receive a new temporary ID to be assigned to the A-loT device from the access network (e.g. from the reader that may be an intermediate node or the base station). As noted above, reasons for a non-retained temporary ID may be that the A-loT device runs out of power to maintain storage of the data bits of the temporary ID in the volatile memory and was not able to re-charge ambient power within a sufficient time.

Between the transceiver and the processing circuitry there may be an input/output point (or node / interface) over which the processing circuitry, in operation, controls the transceiver, i.e. controls the receiver and/or the transmitter and exchange reception/transmission data. The processing circuitry may implement further control tasks, such as controlling the transceiver to transmit user data and control data provided by the processing circuitry and/or receive user data and control data, which is further processed by the processing circuitry. The processing circuitry may be further configured to processing, including determining, deciding, calculating, measuring, etc.

The A-loT device may receive an indication from the access network (e.g. from the reader that may be an intermediate node or the base station) indicating at least one of:
- that said temporary ID is to be used by the A-loT device, or
- that a new temporary ID will be assigned to the A-loT device, or
- a new temporary ID.

The indication may be received by the A-loT (from the reader) in response to A-loT device providing the reader with the temporary ID.

For example, the A-loT device may receive from the reader an indication that the temporary ID (if retained) shall be used when communicating with said reader. This means that the retained temporary ID refers to a device-reader association (the temporary ID is only unique for the specific reader), at least as long as the A-loT device retains the temporary ID or the A-loT device remains within the coverage range (coverage area) of the reader. When the indication indicates that a new temporary ID will be assigned, said indicating may trigger the A-loT device to re-configure a new temporary ID and to discard the retained temporary ID.

The temporary ID may be used (received and/or transmitted) as a part of a random access (RA) procedure and the checking on whether a temporary ID is retained may also be performed within a RA procedure. Such RA procedure may be a 2-step RA or 4-step RA procedure that may be similar to those mentioned in the section of *A-IoT Random Access Procedure* above. Some exemplary implementations are provided below.

### Checking Retained Temporary ID using 4-step RA - contention-based

The paging message received by the A-loT device from the reader may be denoted as Msg0. In response to receiving the paging message, the A-IoT device may generate a random ID and transmit a first message (Msg1) that includes the random ID. In response to receiving a second message Msg2 echoing the random ID, the A-loT device determines whether the random ID in the second message matches the random ID in the first message. This corresponds to checking whether a collision occurs. In case the random ID in the second message matches the random ID in the transmitted first message (i.e. no collision was detected), the A-loT device transmits the retained temporary ID within a third message Msg3.

Msg1 may be a random access request message (e.g. random access preamble as in Fig. 4a) that the A-loT device transmits to the reader. Msg2 may be a random access response message (e.g. as in Fig. 4a) that the reader transmits to the A-loT device in response to the received Msg1. Thus, the second message Msg2 may be interpreted as acknowledgment message for receiving the request. Hence, A-loT messages Msg1 and Msg2 may be used to check contention completion within CBRA.

The random ID may be generated based on the persistent ID that the A-loT device received in the paging message. For example, the persistent ID may be used as a seed parameter to generate the random ID. However, it is noted that the present disclosure is not limited to such random generation of the random ID. The random ID may be determined independently of the A-loT device identity out of a predefined range of the IDs.

The matching of the random IDs included in the first and second messages indicates contention resolution to the A-loT device. This contention resolution triggers the A-loT device to transmit the temporary ID in Msg3 to the reader. In turn, when the random ID in the first message Msg1 and the second message Msg2 do not match, the A-loT device skips transmitting Msg3 to the reader. Since the reader has send Msg2 in response to the received Msg1, the reader expects receiving a message (such as Msg3 or other D2R message) carrying a temporary ID. Not receiving the third message Msg3 indicates to the reader that the A-loT device may have failed receiving Msg2 or transmitting Msg3. The reader may expect receiving Msg3 within a specific resource and/or time window. If the Msg3 is not received within that specific resource and/or time window, Msg3 is determined not to have been received. The resource for receiving the Msg3 may be given by a rule and depend on the resource in which Msg1 and/or Msg2 was received / transmitted by the reader. In this case, reader may trigger retransmission of Msg3 or re-trigger the paging (Msg0).

Hence, if Msg3 is received with no temporary ID included, the A-loT device may receive in a fourth message Msg4 or a R2D message a new temporary ID. The reader may generate the new temporary based on the persistent ID or independently of it and transmit message Msg4 or R2D message including the new temporary ID to the A-loT device. It is noted that even if the A-loT device transmits in Msg3 the temporary ID, the reader may still send the Msg4 (or R2D message) with a new temporary ID to be assigned to the A-loT. This may be the case, in particular, if the reader that responded with Msg2 is different from the reader that has assigned the retained temporary ID to the A-loT device.

In the above described example, the new temporary ID was generated and transmitted to the A-loT device by the reader. Alternatively, the reader may obtain the new temporary ID from another entity. For example, the reader may transmit a request new temporary ID message to a core network (or base station) to request generating the new temporary ID by the core network (or base station). In response to receiving the request new temporary ID message, the core network (or base station) may generate the new temporary ID and transmit the new temporary ID to the reader.

The A-loT device may be configured to transmit the Msg3 including the temporary ID within a time window or in a specific time-domain resource, after determining that the random IDs in Msg1 and Msg2 match. A length (duration) of such time window may be given by the standard, pre-configured by the reader or the like. The duration of the time window may be adaptive. For example, the length of the time window may be adapted based on a predefined threshold of coverage range of the reader and/or of coverage ranges of two or more readers. For example, when the coverage range of one or more readers is lower than the predefined threshold, the time window may be set to a lower value than for coverage ranges being equal to or larger than the predefined threshold. In other words, for an A-loT device being located in smaller coverage range than said predefined threshold, the A-loT device is expected to respond more quickly in transmitting Msg3.

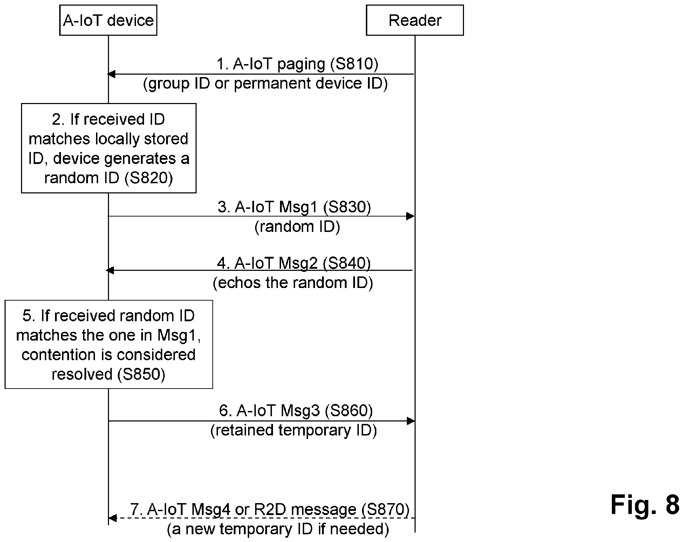

In a first exemplary implementation illustrated in Fig. 8, whether an A-loT device retains a temporary ID is determined using a 4-step RA as described above. The 4-step RA applies to contention-based RA (CBRA) and includes contention resolution. The A-loT device may be pre-configured with a persistent ID which may be a permanent device ID and/or a group ID. For example, the A-loT device may be provided with a group ID when configuring A-loT devices for a specific deployment and/or specific reader.

In step S810 of the first exemplary implementation, the reader sends a paging message to the A-loT device(s). The A-loT device(s) receive the paging message. The paging may include a group ID or a permanent device ID for the A-loT device. If the persistent ID included in the paging message is a group ID, a plurality of A-loT devices may respond with Msg1. In order to avoid collisions, the random ID may be determined by each A-loT depending in its own persistent ID. The reader may store persistent IDs of the A-loT devices which the reader has to read or it may receive the persistent IDs from a CN entity or a BS. In other words, the present disclosure is not limited to any specific architecture of how the reader performs paging and obtains the persistent IDs.

In step S820 of the first exemplary implementation, the A-loT device may determine, whether the received persistent ID (e.g. the group ID or permanent device ID) matches the persistent ID that is stored locally by the A-loT device. In other words, the A-loT device determines whether it is paged (requested to respond / being triggered). The locally stored persistent ID may be stored in a volatile or non-volatile memory of the A-loT device as described above. In case, the locally stored ID matches the received ID, the A-loT device may generate a random ID. Such a random ID may be generated based on the locally stored persistent ID. This approach may be particularly suitable (but is not limited to scenarios) when paging a plurality of A-loT devices at the same time to avoid collisions when all of the plurality of A-loT devices respond to the paging message. Alternatively, the A-loT device may generate a random ID just randomly by using, for example, a random generator of the A-loT device.

In case the received persistent ID (e.g. the group ID or permanent device ID) does not match the persistent ID that is stored locally by the A-loT device, the method ends. Specifically, the A-loT device will further monitor the paging channel.

In step 830 of the first exemplary implementation, the A-loT device transmits a first message to the reader. This is performed in case the A-loT device was paged (Msg0 carried its persistent ID). The first message may be the random access request message Msg1 similar as in Fig. 4a. The A-loT Msg1 includes the random ID. It is noted that, in case the ID in the A-loT paging message is a group ID, each A-loT device belonging to the group as indicated by the group ID may respond with an individually generated random ID, if the received group ID matches the locally stored ID of the respective A-loT device of the group. Hence, in case of ID matching, each A-loT device may send an A-loT Msg1 that includes the random ID specific for the respective A-loT device to the reader device.

It is noted that the size of the random ID (i.e. the number of bits representing the ID) should not be too large in order to keep the power consumption low to generate and transmit a random ID. In the other hand, the size of the random ID should be sufficiently large to keep the likelihood of ID collision low (e.g. ID collision means that the generated random IDs may be same for different A-loT devices). It is advantageous if the random ID is shorter than the persistent ID.

In step S840 of the first exemplary implementation, the reader that received the first message Msg1 transmits the second message Msg2 to the A-loT device. The A-loT device receives the second message Msg2 which also includes (echoes) the random ID. Echoing refers to transmitting the received ID. Msg2 may be similar as described with reference to Fig. 4a.

In step S850 of the first exemplary implementation, using the received random ID, the A-loT device may determine if the received random ID matches the random ID in transmitted A-loT Msg1. If this is the case, the contention of the CBRA procedure is considered being resolved.

In step S860 of the first exemplary implementation, if the temporary ID is retained in the A-loT device, the A-loT device transmits the third message Msg3 that includes the retained temporary ID to the reader. The third message may correspond to Msg3 of Fig. 4a, but in addition include the temporary ID to indicate that it has been retained.

It may occur that the A-loT device no longer retains (stores) the temporary ID as noted before this may be due to the (best case) expiry of the preconfigured temporary ID or the A-loT device may have already performed too many operations of reading / writing etc., so that the power was already consumed before the expiration time. This means that the A-loT device may not be able to include temporary ID in Msg3 to the reader The device can indicate that there is no temporary ID included in Msg3, by an specific code point (for example, all "0"s in the bit-field for temporary ID in Msg3), or a flag bit in Msg3.

In step S870 of the first exemplary implementation, in case the temporary ID is not retained, the reader may transmit Msg4 to the A-loT device. The A-loT Msg4 includes a new temporary ID that is assigned to the A-loT device. The new temporary ID may be generated and assigned to the A-loT device based on the permanent device ID of the A-loT device or by randomly selecting an available (not assigned to another A-loT device) temporary ID. Alternatively, the reader may transmit to the A-loT device an R2D message that includes the new temporary ID.

It is noted that, even if the reader receives the retained temporary ID in Msg3, the reader may still transmit A-loT Msg4 or R2D message to the A-loT device, when the retained temporary ID is double used by said reader and another reader. In case, the temporary ID is retained and the A-loT device, after transmitting A-loT Msg3 to the reader, does not receive after a predefined time period A-loT Msg4 from the reader, the device can assume that the retained temporary ID may be still used by the A-loT device. Msg4 and/or R2D message may be transmitted by the reader to the A-loT device without including the temporary ID in case the temporary ID was decided to be maintained and used by the reader and the A-loT device. The message may include further data such as commands or signaling parameters or the like. It is noted that, in Step S880 of the first exemplary implementation (not shown), the reader may transmit an R2D message to the A-loT device to signal that the A-loT Msg3 transmitted by the A-loT device has been successfully received by the reader. Hence, in this example, the R2D message serves as acknowledgment message.

It is noted that A-loT device may be connected to an external antenna (module) connected to the A-loT device over a port of the A-loT device. Thus, the A-loT device itself does not necessarily comprise antennas.

In summary, **Fig. 8** illustrates a method for determining whether a temporary ID is retained at the A-loT device (the reader determines that based on receiving Msg3). The reader may then decide whether the retained temporary ID is to be further used or whether a new temporary ID will be assigned to the A-loT device (or to a group of A-loT devices).

### Checking Retained Temporary ID using 2-step RA - contention-based

The RA procedure is not necessarily a 4-step RA, but rather may be a 2-step RA. As in case of the 4-step RA, the A-loT device receives a paging message Msg0. The A-loT device may generate a random access request message Msg1 in response to receiving the paging message. The random access request message comprises an ID type indication. The ID type indication indicates whether the reported ID (ID reported in the Msg1) is a random ID or a retained temporary ID.

In case the temporary ID is retained, the random access request message (which may be more generally referred to as a first message) sets the ID type indication to indicate that a temporary ID previously assigned to the A-loT device by the access network is included in the random access request message. Moreover, the temporary ID is included in the Msg1. In case the temporary ID is not retained, the random access request message sets the ID type indication to indicate that a random ID is included in the random access request message. Moreover, the random ID is included in the Msg1.

The random ID may be generated as already discussed before, for example, by using the persistent ID as seed parameter to generate the random ID. The ID type indication may be a flag. The flag may be set to "0" indicating that the random access request message does not include the temporary ID (but rather the random ID), while "1" indicates that Msg1 includes the temporary ID. In this example, the flag value "0" may at the same time indicate to the reader that a new temporary ID needs to be generated and provided to the A-loT device. The random access request message Msg1 carrying the ID type indication may be interpreted as a request new temporary ID message. In turn, the flag value "1" may indicate to the reader that the temporary ID may still be used for device-reader communication. In case Msg1 includes the random ID, the reader may use the random ID from the received Msg1 as the new temporary ID, instead of generating a new temporary ID on the reader side.

It is noted that even if the temporary ID is retained by the A-loT, The A-loT device may generate the random access request message Msg1 including a random ID and indicate in the ID type indicator to the reader that Msg1 includes the random ID. This may indicate to the reader, for example, that the A-loT device requests a new temporary ID (even though the temporary ID is still retained in the A-loT device).

In response to Msg1 including the ID type indication set to random ID, the reader generates a new temporary ID and transmit the new temporary ID to the A-loT device. The reader may transmit the new temporary ID in a random access response message Msg2. In general, the random access response message Msg2 may be used for echoing the retained temporary ID or for providing a new temporary ID to the A-loT device if temporary ID was not retained.

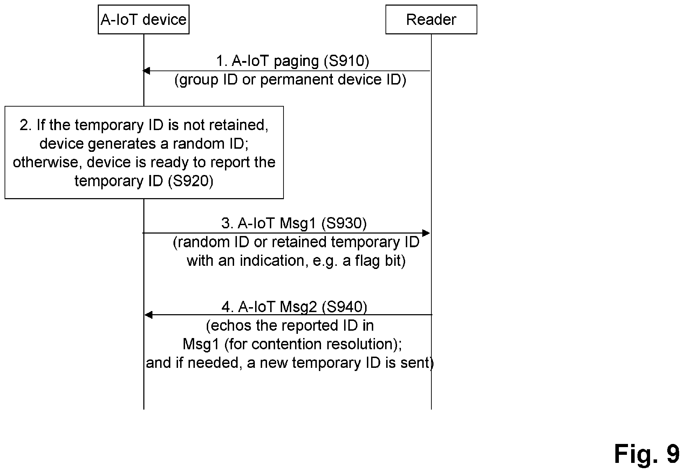

In a second exemplary implementation illustrated in **Fig. 9****,** it is checked whether a temporary ID is retained using a 2-step RA. Step S910 is analogous to Step S810 of the first exemplary implementation, namely the A-loT device receives an A-loT paging message that includes a group ID or a permanent device ID of the A-loT device.

In step S920 of the second exemplary implementation, the A-loT device may determine whether a temporary ID is retained in the A-loT device. If this is not the case, the A-loT device generates a random ID. As in step S820 of the first exemplary implementation, the A-loT device may check whether the received persistent (e.g. group ID or the permanent device ID) match with a locally stored persistent ID, i.e. whether the A-loT device is paged. As in case of the first exemplary implementation, when the received ID is a group ID, all A-loT devices that have said group ID generate a random ID. A device specific random ID may be generated using the permanent device ID as a seed parameter.

In step S930 of the second exemplary implementation, the A-loT device may transmit a Msg1 (random access request message) to the reader. If the temporary ID is retained, Msg1 includes the retained temporary ID. If the temporary ID is not retained, Msg1 includes the random ID. Msg1 may further include a flag that indicates one of the IDs, namely the random ID or the retained temporary ID. Thus, the flag represents an ID type indication.

In step S940 of the second exemplary implementation, in response to receiving Msg1, the reader transmits to the A-loT device Msg2 (random access response message) that includes the random ID or the retained temporary ID. Thus, transmitted Msg2 echoes the ID reported in Msg1 to the reader. The A-loT device receives Msg2 with the echoed random ID or the retained temporary ID. At this step, the contention resolution of the CBRA is finalized. This was the case of no collision. If there is a collision, Msg2 is not transmitted in response to Msg1. Collision means that Msg1 was not received or received with reliability below certain threshold or the like.

In step S940 of the second exemplary implementation, the reader may generate a new temporary ID and assign it to the A-loT device, if the temporary ID is not retained. The reader knows whether the A-loT device retains the temporary ID based on the flag in received Msg1. If the flag indicates the random ID, the reader may generate a new temporary ID and send the new temporary ID in Msg2 to the A-loT device together with the random ID received (for contention resolution purpose). Furthermore, even if the flag indicates the retained temporary ID, operations of generating the new temporary ID and transmitting in Msg2 is still possible. As explained above for the first exemplary implementation, this is useful when the reader decides whether the retained temporary ID is to be further used or whether a new temporary ID will be assigned to the A-loT.

In an alternative approach, the ID type indicator indicates whether a temporary ID was retained. However, Msg1 does not include the temporary ID, but always a random ID. It is also the random ID that is mirrored in Msg2 in order to resolve the contention. Based on the ID type indicator, the reader may still decide to request the A-loT device to report the retained temporary ID or to assign a new temporary ID to the A-loT device. For example, in Msg2 reader can indicate a new temporary ID (along with the random ID received for contention resolution purpose). Once the A-loT device receives the Msg2 containing a temporary ID, the A-loT device will use this one and discard the retained one. Alternatively, in Msg2 reader can indicate device to report the retained temporary ID in the follow-up D2R transmission by including a one-bit indictor.

In a third exemplary implementation a 2-step RA is provided. The A-loT device determines whether a temporary ID is retained, in response to receiving a paging message. In the paging message a temporary ID check request may be included for checking, by the A-loT device, whether the A-loT device retains the temporary ID. In other words, a paging message with a temporary ID check request indicates to the A-loT device that the purpose of the paging message is the temporary ID management, and specifically to check whether a temporary ID is retained. The temporary ID check request may be an indication that is embedded within the paging message as an indication of cause of paging. Alternative paging causes may include service types such as inventory/read/write or the like.

In case the temporary ID is retained, the A-loT device generates a random access request message Msg1 in response to receiving the paging message and transmits the random access request message Msg1. The random access request message comprises the temporary ID. In case the temporary ID is not retained, the A-loT device does not respond to the paging message. This means that, by not sending a response message, such as a random access request message Msg1, the A-loT device indicates to the reader that a new temporary ID is needed. In the third exemplary implementation of the 2-step RA, the A-loT device is explicitly requested to check for a retained temporary ID. Therefore, with the paging message carrying the temporary ID check request, a switching between normal paging processing (without temporary ID check) and advanced paging processing (with temporary ID check) is possible. Moreover, the A-loT device generates a random access request message Msg1, when the temporary ID is retained. The A-loT device does not generate Msg1, when the temporary ID is not retained. This reduces the number of operations and the signaling overhead, resulting in a lower consumption of ambient power.

In the above 2-step RAs, the generated random access request message Msg1 is transmitted, in case the temporary ID is retained. The Msg1 includes the temporary ID. In response to transmitting Msg1, the A-loT device may receive a random access response message Msg2 echoing the temporary ID. Hence, the random access request message Msg1 and the random access response message Msg2 may be used to check contention completion within CBRA. The receiving if Msg2 by the A-loT device may indicate to the A-loT device the contention completion. The reader may further decide to assign a new temporary ID and inform the device to abandon the retained temporary ID. The reader can do so by providing a new temporary ID in Msg2 (along with the temporary ID received for contention resolution).

When the temporary ID in Msg1 and Msg2 do not match, the A-loT device may, for example, re-send the random access request message Msg1 including the same temporary ID.

Alternatively, the A-loT device may transmit a random access request echo message for re-sending the random access response message Msg2 including the temporary ID.

When the temporary ID is not retained, the reader does not receive the random access request message Msg1. As a consequence, reader cannot know whether device has missed paging or device has decided to skip Msg1. As a further enhancement, in case that the temporary ID is not retained, device still responds to the paging with an indication included in Msg1. Such indication could be one-bit to indicate that no temporary ID is retained. Hence, in response to the reception of Msg1, the reader may generate a new temporary ID and transmit the new temporary ID to the A-loT device. The reader may transmit the new temporary ID in the random access response message Msg2. Thus, the random access response message Msg2 may be used for echoing the retained temporary ID and for providing a new temporary ID to the A-loT device.

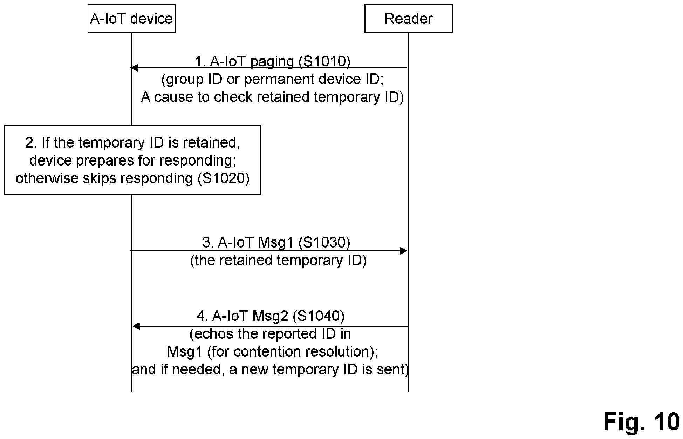

Fig. 10 illustrates the third exemplary implementation, in which it is checked whether a temporary ID is retained using a 2-step RA. Step S1010 of the third exemplary implementation is similar to Step S810 of the first exemplary implementation and to Step S910 of the second exemplary implementation, namely: the A-loT device receives from the reader an A-loT paging message that includes a group ID or a permanent device ID.

In step S1020 of the third exemplary implementation, the A-loT device may determine whether the temporary ID is retained. If this is the case, the A-loT device may prepare for responding, such as transmitting a response to the reader. If no temporary ID is retained, the response preparation may be skipped. This means that the reader will not receive A-loT Msg1.

In step S1030 of the third exemplary implementation, in case the A-loT device has prepared for responding (i.e. the temporary ID is retained), an A-loT Msg1 (random access request message) including the retained temporary ID may be transmitted to the reader.

In step S1040 of the third exemplary implementation, in response to receiving Msg1, the reader may transmit to the A-loT device Msg2 (random access response message) that includes the retained temporary ID, so as to echo the ID reported in Msg1. At this step, the contention resolution of the CBRA is finalized.

In step S1040 of the third exemplary implementation, the reader may generate a new temporary ID and assign it to the A-loT device, if the reader decides such as necessary. In the third exemplary implementation, a non-retained temporary ID causes the A-loT device to not transmit Msg1 to the reader. Therefore, since the reader does not receive any Msg1 from the A-loT device, the reader cannot know whether this is because of paging reception failure, Msg1 transmission failure or device skipping Msg1 due to no temporary ID retained. To improve the situation (not shown), in case that the temporary ID is not retained, device still responds to the paging with an indication included in Msg1. After receiving Msg1 with an indication of no temporary ID retained, the reader can assign a new temporary ID by Msg2.

In the third exemplary implementation, the A-loT paging message may include further a command (instruction, temporary ID check request) that causes the A-loT device determining whether the temporary ID is retained in the A-loT device. Such instruction may be signaled in the A-loT paging message. The command may be considered as a request by which the reader explicitly requests the A-loT device to check whether a temporary ID is retained and report the retained temporary ID (if retained). This implies that the reader expects reception of A-loT Msg1, in case of a retained temporary ID.

### Checking Retained Temporary ID using 2-step RA - contention free

The first exemplary implementation to third exemplary implementations discussed above referred to 4-step RA and 2-step RA for CBRA. In particular, a first message Msg1 (e.g. random access request message) and a second message Msg2 (e.g. random access response message) are used to check contention completion. In the case of contention-free RA, such contention completion check may not be needed, as exemplified below in a fourth exemplary implementation.

Similarly to the CBRA, the A-loT device receives a paging message including a persistent ID (e.g. group ID or permanent device ID etc). Also, the paging message is checked and if the A-loT device recognizes that it is paged, the procedure continues. Otherwise the procedure stops.

In the CFRA case, following the reception of the paging message, the A-loT device may transmit the temporary ID in a contention-free D2R message. The D2R message may further include upper layer data which carries a (persistent) device ID associated with the A-loT device (the device ID is other than the temporary ID). The device ID is known to the access network and/or to the core network.

It is noted that, as also in the first to third exemplary implementations, the contention free D2R message including the temporary ID is transmitted by the A-loT device in case the A-loT device determined that the temporary ID is retained. In case the A-loT device determined that the temporary ID is not retained, the D2R message is transmitted without including temporary ID. The transmitting of the D2R message including the temporary ID (and the device ID) to a reader indicates that the A-loT device may not need a new temporary ID. Hence, when the reader receives the D2R message, the reader would not generate a new temporary ID and assign it to the A-loT device. On the other hand, if the reader decides the retained temporary ID needs to be discard, the reader may generate a new temporary ID, assign it to the A-loT device, and transmit a R2D message including the new temporary ID to the A-loT device. The reader may conclude that the D2R message is not received, if the D2R message is not received within the expected resources (e.g. in a specific time resource or time window).

As noted already, the (permanent) device ID may be uniquely allocated by a 3gpp network (access or core). For example, an Electronic Product Code (EPC) may be used as a device ID. The EPC may have a size of 96 bits, for example, allowing for unambiguous identification. It is noted that such device ID may not be conveniently conveyed on the air interface (e.g. between the A-loT device and reader) due to large overhead and security issues. A large size mean a large overhead in terms of signaling. Further, there may be a risk of unauthorized device tracking.

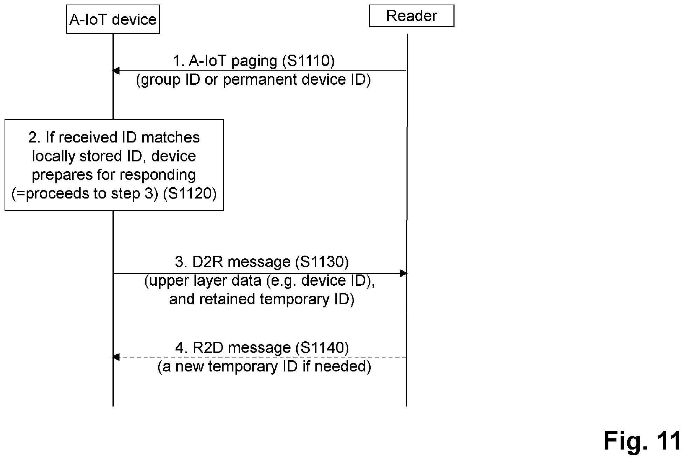

In a fourth exemplary implementation illustrated in **Fig. 11****,** it is checked whether a temporary ID is retained using a 2-step RA suitable for contention-free RA (CFRA). Step S1110 is analogous to Step S810 to S1010 of the first exemplary implementation to third exemplary implementation, respectively, namely the A-loT device receives an A-loT paging message that includes a persistent ID (e.g. a group ID or a permanent device ID) of the A-loT device.

In step S1120 of the fourth exemplary implementation, the A-loT device determines whether the ID received in the A-loT paging message matches a locally stored ID of the A-loT device. If the paged ID (e.g. one of the group ID or permanent device ID) matches the locally stored ID, the A-loT device determines whether a temporary ID is retained in the A-loT device. If this is the case, the A-loT device prepares for responding. If there is no retained temporary ID, the response preparation is skipped. This means that the A-loT device does not send a response message to the reader.

In step S1130 of the fourth exemplary implementation, other than in the third exemplary implementation, the A-loT device may transmit the retained temporary ID in a D2R message (contention-free message) to the reader. The D2R message may include upper layer data, such as the device ID. When there is no retained temporary ID, the A-loT device need not include it in the D2R message.

In step S1140 of the fourth exemplary implementation, the reader may generate a new temporary ID and assign it to the A-loT device. The reader may transmit a R2D message including the new temporary ID to the A-loT device. In turn, when the temporary ID is retained and can be reusable which is decided by the reader, the A-loT device may not receive the R2D message, since a R2D message transmission by the reader was not needed. This means that the non-reception of a R2D message by the A-loT device indicates that the retained temporary ID may be still used by the A-loT device.

It is noted that the D2R and R2D messages are any messages that carry data as a content. Typically they are upper layer messages that are not messages being part of the RA procedure. For example, the D2R and R2D messages may be MAC messages and/or A-loT NAS messages or the like.

### Reader device

In the above exemplary implementations, focus has been given on the A-loT device behavior. In the following, exemplary implementations and options are provided for a reader device. It is noted that a reader device may be an intermediate node or a base station. In general, the reader may be any part of the access network as is the intermediate node or the base station. Nevertheless, the present disclosure is not limited to the reader operating in the access network. It is conceivable to have a reader being a part of a core network, or in some deployment scenario a gNB reader can have functionalities of both AS and NAS layers.

For example, it is provided a reader device for communicating with an ambient Internet of Things, A-loT, device comprising: a transceiver, which in operation transmits to the A-loT device a paging message including a persistent identifier, ID associated with the A-loT device; and circuitry, which in operation receives, in response to the transmitted paging message, a temporary identifier, ID assigned to the loT device by an access network in case the A-loT device retained the temporary ID.

These reader features apply in scenario in which the A-loT device retained the temporary ID. In cases the A-loT did not retain the temporary ID, the handling will be different. In general, the reader is capable of requesting the A-loT device via the paging message to report retained temporary ID. This includes checking, on the A-loT device side whether or not there is the temporary Id retained and reporting it if affirmative.

The reader (that can be also referred to as a "reader device") provided herein may (at least) perform the steps of receiving and/or transmitting of messages from or to the A-loT device as explained in detail in the sections above. The reception and transmission of messages (as also on the A-loT device side) typically involves the transceiver but also circuitry for processing the messages. The transmission processing may for instance include the generating of a message including inserting into the message the data to be carried (e.g. the temporary ID or the persistent ID or further data elements). The reception processing may for instance include receiving, over an interface from the transceiver the received message signal or data and extracting from the message the data elements. The transmission and reception processing may include syntax parsing and application of semantics to trigger actions or the like.

As described above with reference to the exemplary implementations (first to fourth), the reader may receive the retained temporary ID in a third message Msg3 following the contention resolution **(****Fig. 8****),** in a random access request message Msg1 as a part of contention resolution **(****Fig. 9** and **Fig. 10****),** or in a D2R message in a contention-free manner**(****Fig**. **11****).**

In response to receiving of the temporary ID, the reader generates an indication to the A-loT device indicating at least one of:
- that said temporary ID is to be used by the A-loT device.
- that a new temporary ID will be assigned to the A-loT device at a later stage.
- a new temporary ID.

The reader transmits (e.g. the processing circuitry controls the transceiver to transmit) the indication to the A-loT device. In case the indication indicates that the reported temporary ID is to be used by the A-loT device, said indication may be the random access response message Msg2 in which the temporary ID is echoed **(****Fig. 9** and **Fig. 10****).** In other words, echoing the temporary ID received from the A-loT device indicates that the temporary ID is to be further used in communication between the reader and the A-loT device. In another example, Msg2 can be used to assign a new temporary ID together with echoing the temporary ID received from Msg1. In this case, echoing the temporary ID received serves the purpose of contention resolution. If no new temporary ID is included in Msg2, the device can assume the reported temporary ID in Msg1 can be reused.

The reader may receive the retained temporary ID and still decide to assign a new temporary ID to the A-loT device. This may be useful for example in cases in which the reader changed, restarted, reused the temporary ID or in other scenarios. If the reader decides to assign a new temporary ID, the indication in the response message may merely indicate that the new temporary ID will be signaled to the A-loT device in another message (e.g. a subsequent R2D transmission) or the response message may directly include the new temporary ID instead of or together with echoing the retained temporary ID.

In some examples, the indication that the retained temporary ID continues to be used can be implicit. For example, the reader does not respond with any R2D transmission after receiving the retained temporary ID from a D2R transmission.

In correspondence with the above-described reader device, a method for a reader device for paging an A-loT device is provided. **Fig. 7** shows the respective steps of said method that comprises steps of:
- S710: transmitting to the A-loT device a paging message including a persistent identifier, ID associated with the A-loT device.
- S720: receiving, in response to the transmitted paging message, a temporary identifier, ID assigned to the loT device by an access network in case the A-loT device retained the temporary ID.

The circuitry of the reader may control the transceiver to transmit to the A-loT device a new temporary ID assigned to the A-loT device from the access network in case the retained temporary ID is not received. Non reception of the retained temporary ID may include that the reader may not receive the retained temporary ID within a predetermined time window. The predetermined time window may be set based on a coverage range of the reader. For example, a length (duration) of the time window may be set to decreasing values with decreasing coverage range. Alternatively, the length of the time window may be set to increasing values with decreasing RSSI values. These are examples for setting the predetermined time window. Other quantities may be used for setting the length of the time window, such as CSI etc. In other words, the length of the time window may be set based on indicators of channel quality characteristics. However, the reception does not have to be determined using a time window. In some implementations, exact resources in which the response is to be expected are defined e.g. by a predefined (in a standard or by a network configuration) relative position within the resource grid (or one or more resource domains), relative to e.g. transmission of the paging message or Msg 1 or Msg2 or the like.

The reader device may perform steps of the determining of a retained temporary ID, using a 4-step RA or a 2-step RA, as explained above for the A-loT device that communicates with the reader device.

In case of the 4-step RA (above described first exemplary implementation), the reader may receive a first message Msg1 including a random ID and control the transceiver to transmit a second message Msg2 echoing the random ID in the received first message. The reader may receive the temporary ID within a third message Msg3 after transmitting the second message Msg2. The respective signaling of the reader is shown in **Fig. 8****.** The messages (Msg1, Msg2, Msg3) may correspond to RA procedure messages of Fig. 4(a). Specifically, Msg1 may be RA request message, Msg2 may be RA response message, and Msg3/Msg4 may be a scheduled transmission, e.g. scheduled in resources located relatively to the resources of Msg1 or Msg2 or signaled in Msg2 or the like.

In case of the 2-step RA corresponding to the second exemplary implementation described above, the reader can receive a random access request message Msg1 comprising an ID type indication. The ID type indication indicates whether a temporary ID assigned to the A-loT device by the access network is included in the random access request message Msg1. In case the ID type indication indicates that a temporary ID assigned to the A-loT device by the access network is included in the random access request message Msg1, the random access request message also includes the temporary ID. In case the ID type indication indicates that a random ID assigned to the A-loT device by the access network is included in the random access request message Msg1, the random access request message also includes the random ID. Thus, depending on the ID type indication, the reader parses from the message either the retained temporary ID or the random ID according to this example.

In case the ID type indication indicates that that a random ID is included in the random access request message Msg1, the reader may assume (determine) that no temporary ID is retained in the A-loT device.

However, it is noted that the present disclosure is not limited to this example. For instance, it is possible to always receive at the reader the random access request message with a random ID, while the ID type indication indicates whether the temporary ID has been retained or not (without explicitly signaling said temporary ID).

As detailed before for the A-loT device, the paging message includes a persistent ID. The persistent ID may be one of a group ID, a medium access control, MAC, address of the A-loT device; and a unique identifier in 3gpp system, associated with the A-loT device. The reader or a network node (BS or a core network node) may store the A-loT persistent ID possibly in association with further information. Thus, the reader can fetch the persistent ID from its storage / memory to generate the paging message. Alternatively, the reader may receive the persistent ID from the BS (e.g. gNB) or another access / core network node (depending on the paging type).

In an exemplary implementation corresponding to the third exemplary implementation described above, besides the persistent ID, the reader may include into the paging message a temporary ID check request. With this request (that may be embedded as a cause for paging) the reader requests the A-loT device to check, whether the A-loT device retains a temporary ID. In other words, this temporary ID check request distinguishes the paging message used for checking the retaining of the temporary ID from the usual paging message types (causes).

It is noted that such a temporary ID check request may be provided in any of the exemplary implementations, not only in the third exemplary implementation as described herein. The temporary ID check request may be useful especially in cases in which the paging message is only used for checking the temporary ID and no data need to be actually transmitted from the reader to the A-loT device following the paging. On the other hand, the checking of the temporary ID may be also performed as a part of the paging that is indeed followed by data transmission from the reader to the A-loT device, e.g. within Msg4 and/or within a R2D message.

In first to third exemplary implementations, the reader may receive a random access request message (first message) Msg1 comprising the temporary ID In response to receiving the random access request message Msg1 including the temporary ID, the reader may transmit a random access response message Msg2 echoing the temporary ID. In this case, the A-loT device will understand that it is to use the retained temporary ID. Moreover, echoing the temporary ID by the reader together with a new temporary ID may indicate to the A-loT device that the retained temporary ID is not to be used and may or shall be discarded.

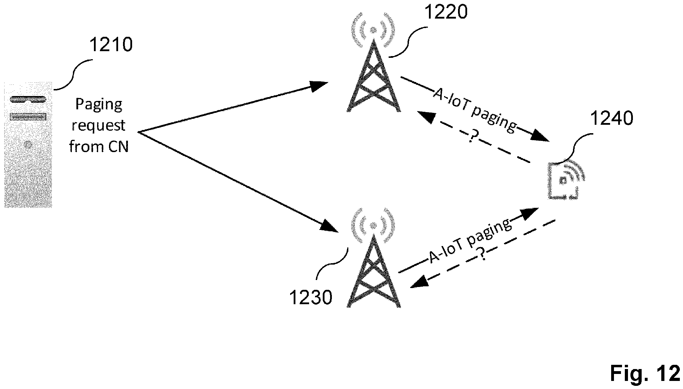

In the above described 4-step RA and 2-step RA, the reader may receive the temporary ID in a first message Msg1 or a random access request message Msg1. As already detailed, messages Msg1 and Msg2 may be used for checking contention resolution, as it applies for CBRA. In case of CFRA (cf. the fourth exemplary implementation), such contention completion check may not be needed. In the CFRA case, the reader may receive the temporary ID in a contention-free message D2R. The D2R message may include upper layer data including a device ID associated with the A-loT device and other than the temporary ID as described above with reference to the A-loT device and Fig. 12. The device ID may be known to the access network and/or to the core network.

### Life Time of AS-level ID

As already mentioned above, A-loT devices fulfill certain low-power and/or low complexity restrictions. For example, the temporary ID assigned in a 2-step RA or in a 4-step RA or the like may be forgotten after a duration of power residing in the A-loT device. Since A-loT device typically have volatile memory for communication purposes, data may no longer be available after the A-loT device runs out of power. In turn, more critical data, such as the temporary device ID, may be stored in non-volatile memory or in a volatile memory powered from a different source (e.g. a battery device).

Depending on the type of A-loT devices, the life time of the temporary ID may be:
- Type-1: after "sustainable operation time" (which is a predetermined time period) expires, the temporary ID is forgotten by A-loT device. For example, if the temporary ID is stored in volatile memory, the temporary ID is forgotten in case the A-loT device runs out of power. For example, a A-loT device may not have the ability to write into non-volatile memory on-the-fly due to power/complexity restriction.
   For example, a sustainable operation time may be defined using a timer. After A-loT paging or A-loT Msg1 of A-loT RA, the timer starts. Before the timer expires, the device may receive R2D or transmit D2R (device-to-reader) messages. After the timer expires, R2D/D2R transmission/reception are not possible. The content of volatile memory is lost.
   For example, a sustainable operation time may be defined using a normalized energy value. After A-loT paging or A-loT Msg1 of A-loT RA, the normalized energy value starts to decrease. Depending on type of operation (such as D2R or R2D), a different amount of energy will be reduced. After the normalized energy value is zero, R2D/D2R are not possible. The content of volatile memory is lost.
- Type-2: AS-level ID may be kept in device longer than sustainable operation time. For example, the temporary ID may be stored in a volatile memory, but with separate energy storage (e.g. a capacitor) to keep the energy longer than energy storage for sustainable operation. For example, an A-loT device may have a separate capacitor for energy backup.
- Type-3: AS-level ID is always kept by the device once assigned. For example, the temporary ID may be stored in non-volatile memory.

For a Type-1 A-loT device, the reader may check whether an A-loT device is still within sustainable operation time. If the A-loT device is not within the sustainable operation time, the assigned temporary ID will likely be lost.

For a Type-2 A-loT device (or Type-1 without the reader checking sustainable operation time), the reader may not be aware about the temporary ID availability at the A-loT device. The reader may try to page the device using the assigned temporary ID.

In the mapping table maintained by the reader, a bit field may be included for each temporary ID to represent the type of the ID (such as type-1, type-2 with or without device reported value, type-3).

In other words, the reader may assign a life-time indication to the temporary ID, the life-time indication indicates an expiration of the temporary ID. The life-time indication may be, for example, a sequence of bits. Such a life-time indication may be stored in a bit filed in the mapping table.

Such a life-time of the temporary ID may be combined with any of the above-mentioned examples and exemplary implementations.

### Determining A-loT-Device to Reader Association

In the first to fourth exemplary implementations discussed above, it was checked whether a temporary ID is retained by an A-loT device. A typical scenario for such check would be an A-loT device being in the coverage area of a reader and/or a certain access network (connected to a core network). In particular, the base station or an intermediate node may be a reader device.

In general, there may be scenarios where an A-loT device may be in the coverage area of multiple readers, each possibly paging the same A-loT device via paging message including an ID for the A-loT device.

It is noted that the following options are described in connection with the preceding embodiments, but not limited thereto. In particular, the following options of handling the multi-reader situation may be applied also in usual paging scenarios not related to the checking on whether a temporary ID has been retained by an A-loT device.

Fig. **12** illustrates exemplarily this scenario where a central network entity 1210 (e.g. a core network entity) may transmit a paging request to two base stations 1220 and 1230. The base stations may be reader devices performing the processing as described above. This means that, in response to reader device (reader) 1220 and 1230 receiving the request from the CN to page the A-loT device 1240, both readers may transmit respective A-loT paging messages to the A-loT device (at the same time or at different time occasions). Both paging messages may include the same group ID or persistent device ID stored in (and associated with) the A-loT device.

Various options on how to handle situations in which an A-loT device is paged by multiple readers exist and may differ in efficiency and suitability for certain A-loT deployment scenarios. For example, in some implementations it may be more efficient to associate an A-loT device with one of the multiple readers for the purpose of data transfer or the like.

For example, in some scenarios, an A-loT device may move from a coverage area of a first reader to a coverage area of a second reader. This may be caused by moving the A-loT device and/or by moving one or more readers. In such scenario it may become unclear whether the second (new) reader can still use the temporary ID assigned previously by the first (old) reader.

For example, in one possible implementations, after the A-loT device reports to the second reader the temporary ID which was assigned to the A-loT by the first reader, the second reader may decide whether or not to maintain the temporary ID from the first reader. The decision may be based, for instance on the assignment of the same temporary ID within the coverage of the second reader. For example, if the second reader does not use the temporary ID for any of the A-loT devices in its coverage, the second reader may decide to maintain the temporary ID of said A-loT device even though the temporary ID has been retained and originally assigned by the first reader. On the other hand, if the temporary ID is already in use in the coverage of the second reader for another A-loT device, the second reader would assign a new temporary ID to said A-loT device (which newly came into coverage of the second reader).

It is noted that there may be various different scenarios of A-loT deployment and the present invention is not limited by those scenarios. In some scenarios, a periodic updating of temporary ID assignment may be desirable, so that a reader has possibly up-to-date information of the assignment of temporary IDs to the respective A-loT devices all the time. In such scenarios, the above described checks of the retained temporary ID may be desirable especially in situations with multiple readers.

In the following, options that are applicable to any of the above mentioned temporary ID checking paging scenarios are provided.

### A. Determining by (A-loT) Device

In this example, device-reader association is determined by the A-loT device and informed to the (selected by the A-loT device). The reader device may have an ID, i.e. a reader ID. The reader ID may be known to the access and/or core network.

The reader may transmit to the A-loT device a reader message that includes a reader ID of the reader. For example, the reader message may be a paging message. The A-loT device may receive from the reader the reader message that includes the reader ID of the reader. When the A-loT device received paging messages from multiple (plurality, meaning two or more) readers, the A-loT device may determine the reader characteristics of each of the multiple readers and then select one of the readers to respond to. Such characteristics may include signal quality (e.g. represented by the received signal strength) or the like. The A-loT device may then use the reader ID of the selected reader in its response message.

Hence, e.g. in the scenario of Fig. 12, the A-loT device knows the reader ID from the received reader (e.g. paging) message and can thus distinguish the two readers 1220 and 1230. The A-loT device may select one of the two reader IDs for the device-reader association, based on signal quality as mentioned above. However, the present disclosure is not limited thereto. For example, the A-loT device may determine which one of the two paging messages has been received first by the A-loT device and select the reader of which the paging message has been received first (among two or more readers). The selection may be followed by informing the reader, e.g. by responding to the reader message with a response including the selected reader ID (reader ID of the selected reader).

When referring to the preceding embodiments related to the check of the temporary ID, the A-loT device may transmit the reader ID together with said temporary ID. Sending together here means sending within one message. However, it is note that this is not mandatory feature and that the reader ID and the temporary ID may be transmitted to the reader within different messages.

For example, the reader ID and the temporary ID may be transmitted in one message, such as the first message Msg1 (cf. **Fig. 9** and **Fig. 10****).** Specifically, the reader may receive from the A-loT device own reader ID together with said temporary ID. Only if the received reader ID is own reader ID, the reader responds to the Msg1 as described in the above embodiments. If the received reader ID is not the own reader ID, then the reader takes no action in response to the message that carried the reader ID. The A-loT device may transmit Msg1 carrying the temporary ID and the selected reader ID to multiple readers (broadcast). When, for example, two readers receive Msg1, the readers determine whether the ID in Msg1 matches the reader ID within their respective reader message. If they match, the respective reader knows that is it associated with the A-loT device. In turn, if the IDs do not match, the respective reader knows that it is not associated with the A-loT device, even though being in the same coverage area.

In a fifth exemplary implementation, the A-loT device knows (e.g. stores) reader-specific ranges of the random ID or the temporary ID that are used in reader message responses (e.g. Msg1). For example, a reader ID may be used as a seed for generating the random ID at the A-loT device. Or, the A-loT device may use the reader ID in a different manner to generate the random ID. Alternatively or in addition, the temporary ID range may be associated or even uniquely associated with a reader ID.

The reader-specific ranges may be transmitted to the A-loT device in the paging message and/or may be pre-configured (e.g. by the network) at the A-loT device and/or the reader.

In some scenarios, the A-loT device does not necessarily need to be aware of the ID ranges. This means that different readers are associated with different ranges (i.e. non-overlapping interval values) of values for the random ID and/or the (retained) temporary ID. Hence, the random ID and/or temporary ID in Msg1 implicitly indicates the associated reader. When two (or one) readers receive Msg1, the readers check whether the random ID or temporary ID falls within the corresponding range of the reader. If this is the case, then the respective reader is associated with the A-loT device. If not, a respective device-reader association does not exists.

In a sixth exemplary implementation, reader-specific pseudo-random sequences may be used to convey (indicate) a reader ID. For example, a reader-specific scrambling sequence can be generated by using the reader ID and used to scramble a part of or the entire message.

Alternatively or in addition, a reader-specific pseudo-random sequence may be inserted as a pre-amble (or post-amble or mid-amble) in a paging message and either directly convey the reader ID or serve as the seed to generate a scrambling sequence. The reader may transmit to the A-loT device the reader-specific scrambling sequence in the paging message. Alternatively, the scrambling sequence may be pre-configured for the respective reader. Hence, the A-loT device knows the reader-specific scrambling sequences that are used in Msg1 **(****Fig. 9** and **Fig. 10****).**

In general, the A-loT device may represent the reader ID by scrambling a message including said temporary ID with a reader ID specific scrambling sequence or by way of a reader-specific pseudo-random sequence appended to a message carrying the temporary ID. The A-loT device indicates the device-reader association by scrambling Msg1 with the reader-specific scrambling sequence. Alternatively, the A-loT device transmits Msg1 with the reader-specific pre-amble. In other words, the reader-specific pre-amble may be added to Msg1 and put before data (e.g. temporary ID and/or reader ID). In this way, the selected reader by the A-loT device is implicitly known to the reader without need to transmit the reader ID..

The reader may receive scrambled Msg1 and use its reader-specific scrambling sequence to descramble Msg1. The reader may extract from Msg1 the temporary ID and/or the reader ID. Alternatively, the reader may use its reader-specific scrambling sequence to extract the preamble, so as to access Msg1 carrying the temporary ID and the reader ID. The reader may use the reader ID and/or the temporary ID for further checks, such as ID match or the like. The reader may transmit the reader ID in an implicit way by scrambling a message that includes said temporary ID with a reader-specific scrambling sequence of by way of a reader-specific pseudo-random sequence appended to a message carrying the temporary ID. The message may be A-loT message Msg2 **(****Fig. 9** and **Fig. 10****).** For example, the reader may use its reader-specific scrambling sequence to scramble A-loT Msg2 that may include the temporary ID. In another example, the reader may add the reader-specific scrambling sequence as preamble to Msg2. Thus, by transmitting Msg2, the reader may echo the temporary ID received A-loT message Msg1.

In a seventh exemplary implementation, the A-loT device may transmit Msg1 as described in the first exemplary implementation to fourth exemplary implementation. Msg1 may be successfully received by multiple readers. Based on the received Msg1, the readers may determine a quality indicator of the received Msg1. Such quality indicator may be, for example, received signal strength indicator (RSSI), channel state information (CSI) or the like. As discussed before, A-loT message Msg1 may be a random access request message. Upon receiving a random access request message from the A-loT device, the reader may control the transmitter to transmit to the A-loT device a quality indication indicating a reception quality. The reader may transmit the quality indication in A-loT Msg2. A-loT Msg2 may be a random access response message **(****Fig. 9** and **Fig. 10****).** When there are multiple readers, the readers may transmit the respective quality indicator in Msg2 to the A-loT device. The A-loT device may receive a plurality of reader messages including said reader message. The plurality of reader messages may include respective plurality of reader IDs. The A-loT device may select among the readers identified by the respective plurality of reader IDs one reader and transmit to the one selected reader the reader ID together with said temporary ID.

For example, the A-loT device may select one of the readers, based on the quality information of the plurality of reader messages (e.g. Msg2). For example, the A-loT device may select a reader whose quality indicator is the largest among the quality indicators. The A-loT device may transmit the reader ID together with said temporary ID. The A-loT device may transmit Msg3 to the selected reader. The other readers may not receive Msg3. Hence, the reception and non-reception of Msg3 indicates whether a reader is selected or not selected for the device-reader association. Alternatively, readers that successfully received Msg1 may transmit Msg2 to the A-loT device. The A-loT device may select a reader, based on which one of the receives Msg2 messages was received first by the A-loT device. The A-loT device may transmit Msg3 to the selected reader, but not to the non-selected readers. Hence, the (non-)reception of Msg3 indicates to readers, which one is used for the device-reader association.

### 8. Determining by Reader Device

Similar to case A above, reader-specific-ranges of the random ID or the (retained) temporary ID may be used in Msg1.

In an eight exemplary implementation, the reader-specific-ranges are coordinated among different readers. For example, the coordination may be performed by a central network entity CN. The ID range splitting may not be known to the A-loT device. The A-loT device may transmit Msg1 that includes the random ID or temporary ID to any of the readers (like a Msg1 broadcast). Upon successfully receiving Msg1, the respective readers may determine whether the ID in Msg1 lies within their range. Since the ID ranges of the readers are non-overlapping, the reader whose ID lies within the ID range may transmit Msg2 to the A-loT device. Other readers whose received ID lies outside their range may not respond by transmitting Msg2 to the A-loT device. The A-loT device may receive Msg2, and hence knows which reader is used for the device-reader association. It is noted that the device-reader association may change at any instance, which may be not known to the A-loT device. However, the CN maintains the device-reader association in conjunction with the ID ranges of the readers.

### C. Determining by Central Network Entity / Base Station

In a ninth exemplary implementation, the A-loT device may not be aware of changes of the device-reader association, which is maintained by a network NW that includes a central network entity and/or base stations. In response to receiving a paging message from multiple readers, the A-loT device may transmit Msg1 including a random ID or (retained) temporary ID to any of the readers (like a broadcast Msg1). The readers that successfully received Msg1 may report to a higher-layer entity (e.g. a base station gNB for topology 2 or CN entity) that Msg1 has been received. The higher-layer entity may determine one of the readers to respond to Msg1 by transmitting Msg2 to the A-loT device. The higher-layer entity may transmit to the determined reader an instruction to respond to the message that the reader received from the A-loT device. Such message may be a random access request message Msg1. In case the reader receives an instruction from the network node to respond to the random access request message from the A-loT device, the reader controls the transmitter to transmit to the A-loT device, in response to receiving the random access request message from the A-loT device, the random access response message. Based on the received Msg2, the A-loT device knows which reader is used for the device-reader association.

### Sharing same Temporary ID

So far, the (retained) temporary ID may be used by one reader device. With the A-loT device retaining a temporary ID, the device-reader association may change, for example, because of the A-loT device moving from the coverage range of a reader to the coverage range of a new reader, which may page the A-loT device. The question is whether the same retained temporary ID may still be used for the new reader.

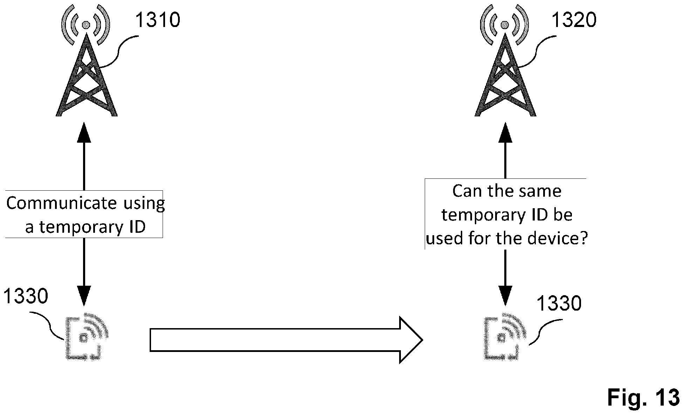

**Fig. 13** illustrates exemplarily this scenario where A-loT device 1330 communicates with a first network node 1310, such as a first base station or a first reader using the temporary ID retained by the A-loT device. The device-reader communication may possible as long as the A-loT device is within the coverage range of reader 1310. However, when the A-loT device 1330 moves outside the coverage range of reader 1310 and enters into the coverage range of new reader 1320 (indicated by a right arrow in **Fig. 13****),** the A-loT device "carries" with it the retained temporary ID that is linked with the device-reader association between the A-loT device 1330 and the reader 1310. However, by moving to a new reader 1320, a new device-reader association exists. The same temporary ID may be shared with a new reader as detailed below.

### D. Reporting by Device

In a ninth exemplary implementation, a new reader may obtain the already by the original reader assigned temporary ID using any of the first exemplary implementation to fourth exemplary implementation discussed in the previous sections. This may be illustrated by the following example scenario.
- When the CN wants to page an A-loT device, it may transmit a paging request to the last know reader (e.g. present reader, current reader).
- The respective reader may transmit an A-loT paging message to the A-loT device, using the assigned temporary ID.
- However, no response from the A-loT device may be received by the reader. This is because the A-loT device may be outside of the coverage range of the reader, and hence may not receive any A-loT paging message from the reader.
- In response of not receiving a message from the A-loT device, the reader may transmit a notification message to the gNB / CN that no response from the A-loT device has been received. The gNB / CN may decide transmitting a paging request message to multiple readers that are nearby the A-loT device. Hence, the A-loT device lies within the coverage range of one or more new readers. The present disclosure is not limited to any specific CN paging implementation such as strategy for enlarging the paging area (corresponding to selecting a number of readers performing the paging) if paging of a specific A-loT device fails.
- The one or multiple new reader(s) (selected by the CN)may transmit an A-loT paging message including a group ID or a device ID to the A-loT device.
- The A-loT device receives Msg1 and determines whether the temporary ID is still retained. If this is the case, A-loT device transmits in Msg3 **(****Fig. 8****)** or Msg1 **(****Fig. 9** and **Fig. 10****)** or D2R message **(****Fig. 11****)** including the retained temporary ID to the one or multiple new reader(s). The device-reader association can be decided based on the above disclosure on *Determining A-IoT Device to Reader Association.*
   It is noted that in the case of the above discussed fifth exemplary implementation, where the range of temporary ID is split among multiple readers, the A-loT device may not report its temporary ID to the new reader, because a new temporary ID may be generated anyway.
- If the temporary ID is not retained, a new temporary ID may be assigned for use with the new reader. In this case, the new reader may transmit the new temporary ID to the A-loT device in Msg4 or R2D message **(****Fig. 8****)** or Msg2 **(****Fig. 9** and **Fig. 10****)** or R2D message **(****Fig. 11****).**

Hence, in the ninth exemplary implementation, the device (A-loT device) reports the retained temporary ID to the new reader.

### E. Informing the (A-loT) Device

In a tenth exemplary implementation, the retained temporary ID may be shared by indicating to the device (A-loT device) whether the entity (e.g. reader, base station, central network) performing the ID assignment has changed or not. If said entity has not changed, the assigned temporary ID can be used. This may be illustrated by the following example scenario, which builds upon the ninth exemplary implementation, with the respective processing being repeated for completeness of the ID sharing processing of the tenth exemplary implementation.
- When the CN wants to page an A-loT device, it may transmit a paging request to the last know reader (e.g. present reader, current reader).
- The respective reader may transmit an A-loT paging message to the A-loT device, using the assigned temporary ID.
- However, no response from the A-loT device may be received by the reader. This is because the A-loT device may be outside of the coverage range of the reader, and hence may not receive any A-loT paging message from the reader.
- In response of not receiving a message from the A-loT device, the reader may transmit a notification message to the gNB / CN that no response from the A-loT device has been received. The gNB / CN may decide transmitting a paging request message to multiple readers that are nearby the A-loT device. Hence, the A-loT device lies within the coverage range of one or more new readers.

The above processing is the same as in the ninth exemplary implementation. In the the tenth exemplary implementation, the processing differs from the one of the ninth exemplary implementation as follows:
- The one or multiple new reader pages the A-loT device by transmitting an A-loT paging message, using a group ID or a permanent device ID, but includes further an entity ID. The entity ID may be the ID of a reader, a base station, or an entity in core network. When the entity ID is a reader ID, the entity ID may be same as the reader ID of the reader device that transmits the paging message. Alternatively, the reader ID used for the entity ID may be different from the reader ID of the reader transmitting the paging message. Hence, the entity ID allows for signaling to the A-loT device the entity responsible for assigning the temporary ID associated with this reader which may be different from the entity that transmits the paging message.
- If the temporary ID assigning entity remains the same for the new reader, the A-loT device may not expect a new temporary ID (if the temporary ID is retained).
   It is noted that the A-loT device may still receive a temporary ID (the same one) during a RA procedure, because the new reader is not aware whether the device still retains the assigned temporary ID. If the A-loT device retains a temporary ID, the A-loT device may discard the received temporary ID, without writing it to the memory. This avoids the energy consumption due to the writing operation, so that more power resides for the A-loT device.
- If the temporary ID assigning entity is different for the new reader, the A-loT device will expect a new temporary ID. The A-loT device may write the received temporary ID during a RA procedure into the memory.

### Exemplary Implementations - A-IoT device and Reader

As mentioned above, some A-loT devices have a limited energy capacity. The energy could be obtained from the environment (vibration, light, heat) or a carrier wave, e.g., provided by the gNB/intermediate node. The A-loT device may not have the legacy RRC states, ARQ, and HARQ. It may implement, e.g. repetitions to increase robustness.

The A-loT device has a limited power energy; hence it may not be able to communicate at any time instance, with the desired transmission power, and with maximum allowed message size. In addition, the A-loT device may be defined/configured with various states, such as, power OFF, charging, communication, and sleep. The A-loT device may not be able to communicate in all these states. To facilitate the communication considering the mentioned limitations, the A-loT device may signal relevant information for the subsequent data transmission(s) -uplink and/or downlink.

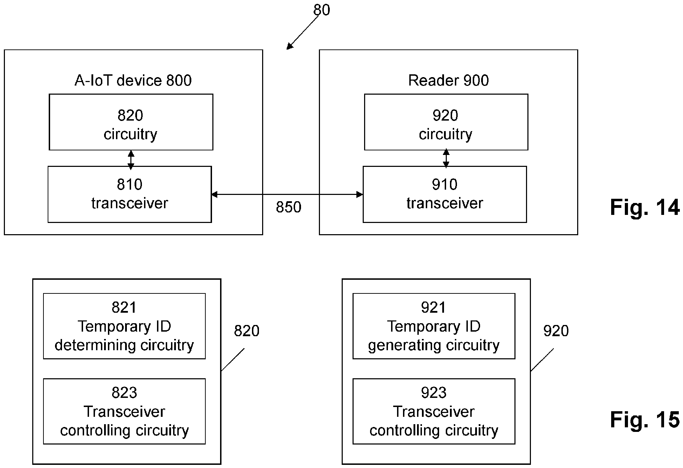

**Fig. 14** illustrates a general, simplified, and exemplary block diagram of an A-loT device 800 and a reader 900 (user equipment, base station or intermediate node connected to a base station) forming a communication system 80. The A-loT device 800 may be a wearable, smart home device, automotive device, sensor, smart key, or healthcare device, for example.

The A-loT device 800 and the reader 900 (eNB/gNB) are communicating with each other over a (wireless) physical channel 850, respectively, using their transceivers 810 (A-loT device side) and 910 (reader side). The reader 900 and the A-loT device 800 are capable of transmitting as well as receiving radio signals via the channel 850. Together, the reader 900 and the A-loT device 800 form a communication system 80, for example, a 5G or future communication system. The communication system 80 may further include other entities, such as further readers, base stations, intermediate nodes, and/or A-loT devices. Any of the above-described embodiments may be implemented in the A-loT device 800, the reader 900, and/or communication system 80 where appropriate.

The A-loT device 800 comprises a transceiver 810 and a (processing) circuitry 820, and the reader 900 comprises a transceiver 910 and a (processing) circuitry 920. The transceiver 810, 910 in turn comprise and/or function as a receiver and/or a transmitter.

In this disclosure, in other words, the term "transceiver" is used for hardware and/or software components that allow the A-loT device 800, and the reader 900 to transmit and/or receive radio signals over the wireless channel 850, for example, a physical channel. Moreover, the term "circuitry" includes processing circuitry formed by one or more processors or processing units, etc.

In some embodiments, the transceiver 810 of the A-loT device 800 receives a paging message; and transmits a first message including an identifier indication for the A-loT device to the reader 900.

In some embodiments, the transceiver 910 of the reader 900 transmits a paging message to the A-loT device 800, and receives a first message from the A-loT device 800, the first message including an identifier indication for the A-loT device 800.

The circuitry may be configured by software to perform the functions as described in any of the above embodiments. As shown in **Fig. 15****,** the circuitry 820 of the A-loT device may further comprise a functional module referred to as temporary ID determining circuitry 821 for determining whether the temporary ID is retained in the A-loT device. A transceiver controlling circuitry 823 is a functional module that controls the transceiver to receive a paging message and/or to transmit a first message including an identifier indication. Moreover, as shown in **Fig. 15****,** the circuitry 920 of the reader may further comprise a functional module referred to as temporary ID generating circuitry 921 for generating the (new) temporary ID. A transceiver controlling circuitry 923 is a functional module that controls the transceiver to transmit the paging message and/or receive the first message including the identifier indication.

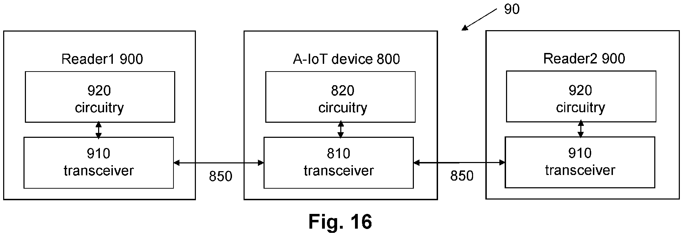

**Fig. 16** illustrates another general, simplified, and exemplary block diagram of an A-loT device 800, a first reader 900 (user equipment, base station or intermediate node connected to a base station) 900, and a second reader 900 (e.g. user equipment, base station or intermediate node connected to a base station) forming a communication system 90. The A-loT device 800 may be configured analogously as the A-loT device described for **Fig. 15** above. The first and second reader 900 may be configured analogously as the reader described for **Fig. 15** above.

In addition, to the properties as described with respect to **Fig. 15****,** the first and second readers 900 and the A-loT device 800 are communicating with each other over a (wireless) physical channel 850, respectively, using their respective transceivers 910 (reader side) and 810 ( A-loT device side). The first and second reader 900 and the A-loT device 800 are capable of transmitting as well as receiving radio signals via the channel 850. Together, the A-loT device 800, the first and the second reader 900 form a communication system 90, for example, a 5G or future communication system. The communication system 90 may further include other entities, such as further readers, base stations, intermediate nodes and/or A-loT devices. Any of the above-described embodiments may be implemented in the A-loT device 800, the reader 900, and/or the communication system 90 where appropriate. The communication system 90 enables determining a device-reader association according to any of the fifth to ninth exemplary implementations and/or enables sharing of a (retained) temporary ID according to any of the tenth or eleventh exemplary implementation.

Moreover, it is noted that the A-loT device, as described in any of the above embodiments and examples, may be integrated on an integrated circuit (IS). Moreover, the integration does not necessary include the entire transceiver. The transceiver is, in general, not necessarily a part of the A-loT device. For example, an A-loT device may be connected to an external antenna or antenna module (possibly also including front end processing chain per antenna) connected to the A-loT device over a port of the A-loT device. A similar structure applies to the gNB.

Moreover, a computer program is provided including code instructions stored on a nontransitory medium, which when executed on one or more processor, causes the one or more processors to execute a method according to any of the above mentioned embodiments and examples.

Still further, an integrated circuit is provided that embodies the circuitry of the A-loT device as described above in any of the embodiments or exemplary implementations. Moreover, an integrated circuit is provided that embodies the circuitry of the reader as described above in any of the embodiments or exemplary implementations.

### RRC connection setup and reconfiguration procedures

Interactions between a UE, gNB, and AMF (an 5GC entity) in the context of a transition of the UE from RRC_IDLE to RRC_CONNECTED for the NAS part are described (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS Control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

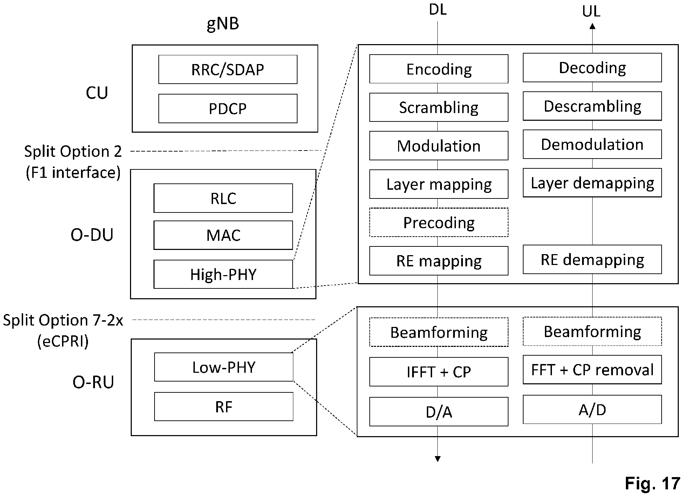

**Fig. 17** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function. The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided there between.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided there between. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### Base Station

In the present disclosure, the base station may be a Transmission Reception Point (TRP), a cluster head, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### User Equipment

A *terminal or user terminal or user device or mobile station or mobile node* is referred to in the LTE and NR as a *user equipment (UE).* This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), Vehicle to Everything (V2X) communication, and communication between an Ambient loT Reader and an Ambient loT Device. The channels in the present disclosure may be replaced with PSCCH, PSSCH, Physical Sidelink Feedback Channel (PSFCH), PSBCH, PRDCH (Physical Reader-to-Device Channel), PDRCH (Physical Deviceto-Reader Channel), PDCCH, PUCCH, PDSCH, PUSCH, and PBCH. For example, control information of the present disclosure may be replaced with any of DCI, UCI, SCI (Sidelink Control Information), R2D Control Information and D2R Control Information.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Ambient IoT

The terminal and the base station in one exemplary embodiment of the preset disclosure may be replaced with any of an Ambient loT Device or an Ambient loT Reader.

The Ambient loT Device may be a wireless communication device having a backscattering function or having a transmission/reception bandwidth of several resource blocks or less. Further, the Ambient loT Reader may be a wireless communication device having a communication function with an Ambient loT Device. The Ambient loT Device may also be referred to as an Ambient loT terminal, an loT terminal, an LPWA terminal, or a Tag.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

Aspect 1: An ambient Internet of Things, A-loT, device, comprising: a transceiver, which in operation: receives a paging message including a persistent identifier, ID, associated with the A-loT device; and circuitry, which in operation: determines, in response to receiving the paging message, whether a temporary ID assigned to the A-loT device by an access network is retained in the A-loT device; and controls, when the temporary ID is retained, the transceiver to transmit the temporary ID to the access network.

Aspect 2: The A-loT device, according to aspect 1, wherein the circuitry, in operation, controls, when it is determined that the temporary ID is not retained, the transceiver to receive, a new temporary ID assigned to the A-loT device from the access network.

Aspect 3: The A-loT device, according to aspects 1 or 2, wherein the transceiver, in operation, receives an indication from the access network indicating at least one of: that said temporary ID is to be used by the A-loT device, that a new temporary ID will be assigned to the A-loT device, and a new temporary ID.

Aspect 4: The A-loT device according to any of aspects 1 to 3, wherein the circuitry, in operation: generates, in response to receiving the paging message, a random ID; controls the transceiver to transmit a first message (msg1) including the random ID; and determines, in response to receiving a second message (msg2) echoing the random ID, whether the random ID in the second message matches the random ID in the first message; wherein, the temporary ID is transmitted within a third message (msg3) in case the random ID in the second message matches the random ID in the transmitted first message.

Aspect 5: The A-loT device according to any of aspects 1 to 3, wherein the circuitry, in operation, generates a random access request message (msg1) in response to receiving the paging message, the random access request message (msg1) comprising an ID type indication; in case the temporary ID is retained, the random access request message (msg1) comprises the ID type indication indicating that a temporary ID assigned to the A-loT device by the access network is included in the random access request message (msg1), and the temporary ID; and the circuitry, in operation, controls the transceiver to transmit the random access request message (msg1).

Aspect 6: The A-loT device according to aspect 5, wherein in case the temporary ID is not retained, the random access request message (msg1) comprises a random ID and the ID type indication indicating that a random ID generated by the A-loT device is included in the random access request message (msg1).

Aspect 7: The A-loT device according to any of aspects 1 to 3, wherein the paging message includes a temporary ID check request for checking, by the A-loT device, whether the A-loT device retains the temporary ID; in case the temporary ID is retained: the circuitry, in operation, generates a random access request message (msg1) in response to receiving the paging message; and the random access request message (msg1) comprises the temporary ID, and the circuitry, in operation, controls the transceiver to transmit the random access request message (msg1).

Aspect 8: The A-loT device according to aspect 7, in case the temporary ID is not retained, the transceiver, in operation does not respond to the paging message.

Aspect 9: The A-loT device according to any of aspects 5 to 8, wherein the transceiver, in operation, receives in response to transmitting the random access request message (msg1) including the temporary ID, a random access response message (msg2) echoing the temporary ID.

Aspect 10: The A-loT device according to any of aspects 1 to 3, wherein the temporary ID is transmitted in a contention-free message (D2R) including upper layer data including a device ID associated with the A-loT device and other than the temporary ID, the device ID being known to the access network.

Aspect 11: The A-loT device according to any of aspects 1 to 10, wherein the persistent ID is one of: a group ID stored on the A-loT device in a memory that is persistent in case there is not sufficient power to perform communication; a medium access control, MAC, address of the A-loT device; and a unique identifier in a 3gpp system, associated with the A-loT device.

Aspect 12: The A-loT device according to any of aspects 1 to 11, wherein the transceiver in operation receives from a reader a reader message including a reader ID of the reader.

Aspect 13: The A-loT device according to aspect 12, wherein the reader message is said paging message.

Aspect 14: The A-loT device according to aspect 12 or 13, wherein the circuitry, in operation controls the transceiver to transmits the reader ID together with said temporary ID.

Aspect 15: The A-loT device according to aspect 12 or 13, wherein the transceiver, in operation, receives a plurality of reader messages including said reader message, the plurality of reader messages including respective plurality of reader IDs, and the circuitry, in operation selects among the readers identified by the respective plurality of reader IDs one reader and transmits to the one selected reader the reader ID together with said temporary ID.

Aspect 16: The A-loT device according to any of aspects 12 to 15, wherein the reader ID is transmitted by scrambling a message including said temporary ID with a reader ID specific scrambling sequence or by way of a reading-specific pseudo-random sequence appended to a message carrying the temporary ID.

Aspect 17: A reader device for communicating with an ambient Internet of Things, A-loT, device comprising: a transceiver, which in operation transmits to the A-loT device a paging message including a persistent identifier, ID associated with the A-loT device; and circuitry, which in operation receives, in response to the transmitted paging message, a temporary identifier, ID assigned to the A-loT device by an access network in case the A-loT device retained the temporary ID.

Aspect 18: The reader device according to aspect 17, wherein the circuitry, in operation, in response to receiving the temporary ID, generates an indication to the A-loT device indicating at least one of: that said temporary ID is to be used by the A-loT device, that a new temporary ID will be assigned to the A-loT device, and a new temporary ID; and controls the transceiver to transmit the indication to the A-loT device.

Aspect 19: The reader device according to aspect 17 or 18, wherein the circuitry, in operation, controls, the transceiver to transmit to the A-loT device a new temporary ID assigned to the A-loT device from the access network in case the retained temporary ID is not received.

Aspect 20: The reader device according to any of aspects 17 to 19, wherein the transceiver, in operation, receives a first message (msg1) including a random ID; and the circuitry, in operation, controls the transceiver to transmit a second message (msg2) echoing the random ID in the received first message; and the transceiver, in operation, receives the temporary ID within a third message (msg3) after transmitting the second message (msg2).

Aspect 21: The reader device according to any of aspects 17 to 19, wherein the transceiver, in operation, receives a random access request message (msg1) comprising an ID type indication indicating whether a temporary ID assigned to the A-loT device by the access network is included in the random access request message (msg1); wherein in case the ID type indication indicates that a temporary ID assigned to the A-loT device by the access network is included in the random access request message (msg1), the random access request message also includes the temporary ID or a random ID.

Aspect 22: The reader device according to aspect 21, wherein in case the ID type indication indicates that that a random ID is included in the random access request message (msg1), determining that no temporary ID is retained in the A-loT device.

Aspect 23: The reader device according to any of aspects 17 to 19, wherein the paging message includes a temporary ID check request for checking, by the A-loT device, whether the A-loT device retains a temporary ID; the transceiver, in operation, receives a random access request message (msg1) comprising the temporary ID in case the A-loT device retains the temporary ID.

Aspect 24: The reader device according to any of aspects 19 to 23, wherein the transceiver, in operation, transmits in response to receiving the random access request message (msg1) including the temporary ID, a random access response message (msg2) echoing the temporary ID.

Aspect 25: The reader device according to any of aspects 17 to 19, wherein the temporary ID is received in a contention-free message (D2R) including upper layer data including a device ID associated with the A-loT device and other than the temporary ID, the device ID being known to the access network.

Aspect 26: The reader device according to any of aspects 17 to 25, wherein the persistent ID is one of: a group ID stored on the A-IoT device in a memory that is persistent in case there is not sufficient power to perform communication; a medium access control, MAC, address of the A-loT device; and a unique identifier in 3gpp system, associated with the A-loT device.

Aspect 27: The reader device according to any of aspects 17 to 26, wherein the transceiver in operation transmits to the A-loT device a reader message including a reader ID of the reader.

Aspect 28: The reader according to aspect 27, wherein the reader message is said paging message.

Aspect 29: The reader device according to any of aspects 27 to 28, wherein the transceiver, in operation, receives from the A-loT device said reader ID together with said temporary ID.

Aspect 30: The reader device according to any of aspects 27 to 29, wherein the reader ID is transmitted by scrambling a message including said temporary ID with a reader ID specific scrambling sequence or by way of a reading-specific pseudo-random sequence appended to a message carrying the temporary ID.

Aspect 31: The reader device according to any of aspects 27 to 30, wherein the circuitry in operation controls the transmitter to transmit to the A-loT device, upon receiving a random access request message from the A-loT device, a quality indication indicating a reception quality.

Aspect 32: The reader device according to any of aspects 27 to 30, wherein in case a transceiver in operation receives an instruction from a network node to respond to a random access request message from the A-loT device, the circuitry in operation controls the transmitter to transmit to the A-loT device, in response to receiving a random access request message from the A-loT device, a random access response message.

Aspect 33: A method for an ambient Internet of Things, A-loT, device, comprising: receiving a paging message including a persistent identifier, ID, associated with the A-loT device; determining, in response to receiving the paging message, whether a temporary ID assigned to the A-loT device by an access network is retained in the A-loT device; and when the temporary ID is retained, transmitting the temporary ID to the access network.

Aspect 34: A method for a reader device for communicating with an ambient Internet of Things A-loT device comprising: transmitting to the A-loT device a paging message including a persistent identifier, ID associated with the A-loT device; and receiving, in response to the transmitted paging message, a temporary identifier, ID assigned to the A-loT device by an access network in case the A-loT device retained the temporary ID.

Aspect 35: An integrated circuit, which in operation, controls a process of an A-loT device, the process comprising the following steps performed by the A-loT device: receiving a paging message including a persistent identifier, ID, associated with the A-loT device; determining, in response to receiving the paging message, whether a temporary ID assigned to the A-loT device by an access network is retained in the A-loT device; and when the temporary ID is retained, transmitting the temporary ID to the access network.

Aspect 36: An integrated circuit, which in operation, controls a process of a reader device, the process comprising the following steps performed by the reader device: transmitting to the A-loT device a paging message including a persistent identifier, ID associated with the A-loT device; and receiving, in response to the transmitted paging message, a temporary identifier, ID assigned to the A-loT device by an access network in case the A-loT device retained the temporary ID.

It is noted that features of the circuitry in the above mentioned aspects of the A-loT device and the reader device are equally applicable to the integrated circuit, IC, aspects 35 and 36.

Aspect 37: A program stored on a storage medium and including code instructions, which, when executed on one or more processors of an A-loT device, cause the one or more processors to execute the following steps: receiving a paging message including a persistent identifier, ID, associated with the A-loT device; determining, in response to receiving the paging message, whether a temporary ID assigned to the A-loT device by an access network is retained in the A-loT device; and when the temporary ID is retained, transmitting the temporary ID to the access network.

Aspect 38: A program stored on a storage medium and including code instructions, which, when executed on one or more processors of a reader device, cause the one or more processors to execute the following steps: transmitting to the A-loT device a paging message including a persistent identifier, ID associated with the A-loT device; and receiving, in response to the transmitted paging message, a temporary identifier, ID assigned to the A-loT device by an access network in case the A-loT device retained the temporary ID.

It is noted that features of the circuitry in above mentioned aspects of the A-loT method and the reader method are equally applicable to the program aspects 37 and 38.

Summarizing, the present disclosure relates to an ambient Internet of Things (A-loT) device and a reader device, and respective methods for an A-loT device and a reader device. More specifically, an ambient Internet of Things, A-loT, device, comprises: a transceiver, which in operation: receives a paging message including a persistent identifier, ID, associated with the A-loT device; and circuitry, which in operation: determines, in response to receiving the paging message, whether a temporary ID assigned to the A-loT device by an access network is retained in the A-loT device; and controls, when the temporary ID is retained, the transceiver to transmit the temporary ID to the access network.

## Claims

1. An ambient Internet of Things, A-loT, device, comprising:
a transceiver, which in operation:
- receives a paging message including a persistent identifier, ID, associated with the A-loT device; and
circuitry, which in operation:
- determines, in response to receiving the paging message, whether a temporary ID assigned to the A-loT device by an access network is retained in the A-loT device; and
- controls, when the temporary ID is retained, the transceiver to transmit the temporary ID to the access network.

2. The A-loT device, according to claim 1, wherein the circuitry, in operation, controls, when it is determined that the temporary ID is not retained, the transceiver to receive, a new temporary ID assigned to the A-loT device from the access network.

3. The A-loT device, according to claim 1 or 2, wherein the transceiver, in operation, receives an indication from the access network indicating at least one of:
- that said temporary ID is to be used by the A-loT device,
- that a new temporary ID will be assigned to the A-loT device, and
- a new temporary ID.

4. The A-loT device according to any of claims 1 to 3, wherein
the circuitry, in operation:
- generates, in response to receiving the paging message, a random ID;
- controls the transceiver to transmit a first message (msg1) including the random ID; and
- determines, in response to receiving a second message (msg2) echoing the random ID, whether the random ID in the second message matches the random ID in the first message;
wherein, the temporary ID is transmitted within a third message (msg3) in case the random ID in the second message matches the random ID in the transmitted first message

5. The A-loT device according to any of claims 1 to 3, wherein
the circuitry, in operation, generates a random access request message (msg1) in response to receiving the paging message, the random access request message (msg1) comprising an ID type indication;
in case the temporary ID is retained, the random access request message (msg1) comprises the ID type indication indicating that a temporary ID assigned to the A-loT device by the access network is included in the random access request message (msg1), and the temporary ID; and
the circuitry, in operation, controls the transceiver to transmit the random access request message (msg1).

6. The A-loT device according to claim 5, wherein in case the temporary ID is not retained, the random access request message (msg1) comprises a random ID and the ID type indication indicating that a random ID generated by the A-loT device is included in the random access request message (msg1).

7. The A-loT device according to any of claims 1 to 3, wherein
the paging message includes a temporary ID check request for checking, by the A-loT device, whether the A-loT device retains the temporary ID;
in case the temporary ID is retained:
- the circuitry, in operation, generates a random access request message (msg1) in response to receiving the paging message; and
- the random access request message (msg1) comprises the temporary ID, and
- the circuitry, in operation, controls the transceiver to transmit the random access request message (msg1).

8. The A-loT device according to claim 7, in case the temporary ID is not retained, the transceiver, in operation does not respond to the paging message.

9. The A-loT device according to any of claims 4 to 7, wherein the transceiver, in operation, receives in response to transmitting the random access request message (msg1) including the temporary ID, a random access response message (msg2) echoing the temporary ID.

10. The A-loT device according to claim 1 or 2, wherein
the temporary ID is transmitted in a contention-free message (D2R) including upper layer data including a device ID associated with the A-loT device and other than the temporary ID, the device ID being known to the access network.

11. The A-loT device according to any of claims 1 to 10, wherein the persistent ID is one of:
- a group ID stored on the A-loT device in a memory that is persistent in case there is not sufficient power to perform communication;
- a medium access control, MAC, address of the A-loT device; and
- a unique identifier in a 3gpp system, associated with the A-loT device.

12. A reader device for communicating with an A-loT device comprising:
a transceiver, which in operation transmits to the A-loT device a paging message including a persistent identifier, ID associated with the A-loT device; and
circuitry, which in operation receives, in response to the transmitted paging message, a temporary identifier, ID assigned to the A-loT device by an access network in case the A-loT device retained the temporary ID.

13. The reader device according to claim 12, wherein the circuitry, in operation, in response to receiving the temporary ID, generates an indication to the A-loT device indicating at least one of:
- that said temporary ID is to be used by the A-loT device,
- that a new temporary ID will be assigned to the A-loT device, and
- a new temporary ID; and
controls the transceiver to transmit the indication to the A-loT device.

14. A method for an ambient Internet of Things, A-loT, device, comprising:
receiving a paging message including a persistent identifier, ID, associated with the A-loT device;
determining, in response to receiving the paging message, whether a temporary ID assigned to the A-loT device by an access network is retained in the A-loT device; and
when the temporary ID is retained, transmitting the temporary ID to the access network.

15. A method for a reader device for paging an A-loT device comprising:
transmitting to the A-loT device a paging message including a persistent identifier, ID associated with the A-loT device; and
receiving, in response to the transmitted paging message, a temporary identifier, ID assigned to the A-loT device by an access network in case the A-loT device retained the temporary ID.
